# FASCICULE DE BREVET EUROPEEN

(11) **EP 3 381 798 B1**
(45) Date de publication et mention de la délivrance du brevet: **27.11.2019**
(21) Numéro de dépôt: 18164623.3
(22) Date de dépôt: 28.03.2018
(51) Int. Cl.: B64C 27/00

(54) **GENERATEUR D'EFFORTS DYNAMIQUES COMPRENANT AU MOINS DEUX BALOURDS ET ACTIONNEUR COMPRENANT DE TELS GENERATEURS**
DYNAMISCHER KRAFTGENERATOR MIT MINDESTENS ZWEI UNWUCHTEN UND AKTUATOR MIT SOLCHEN KRAFTGENERATOREN
DYNAMIC FORCE GENERATOR COMPRISING AT LEAST TWO UNBALANCED MASSES AND ACTUATOR COMPRISING SAID GENERATORS

(30) Priorité: 28.03.2017 FR 1752598
(43) Date de publication de la demande: 03.10.2018
(73) Titulaire: HUTCHINSON, 75008 Paris (FR)
(72) Inventeur: SIX, Marc-François, 45120 CORQUILLEROY (FR); TAVIN, Gérard, 49100 ANGERS (FR)
(74) Mandataire: Gevers & Orès

(56) Documents cités:
- WO-A1-2014/085236
- WO-A1-2014/153449
- US-A- 5 005 439
- US-B2- 9 073 627

## Description

L'invention concerne un générateur d'efforts dynamiques comprenant au moins deux balourds et un actionneur comprenant de tels générateurs.

On connaît de nombreux générateurs d'efforts dynamiques à balourds.

Un balourd est une masse excentrée par rapport à l'axe de rotation du générateur d'efforts dynamiques.

Dans ce type de générateur d'efforts dynamiques, les balourds sont mis en rotation pour générer une force centrifuge dont la résultante permet en pratique de contrecarrer une vibration générée dans une structure.

En particulier, dans le domaine des aéronefs, les moteurs génèrent des vibrations qu'on cherche à diminuer ou du moins, à limiter.

C'est notamment le cas pour les aéronefs à voilure tournante (hélicoptères). En effet, le rotor (principal ou secondaire le cas échéant) permettant la sustentation de l'hélicoptère génère de nombreuses vibrations, notamment sur le fuselage, qu'il convient de contrecarrer.

Pour ces applications en particulier, l'utilisation de générateur d'efforts dynamiques à au moins deux balourds est intéressant dans la mesure où les générateurs sont relativement légers et compacts, en comparaison à d'autres familles de générateurs d'efforts dynamiques.

Les documents US 5 005 439, EP 2 926 026 ou US 9 073 627 proposent différentes conceptions de générateurs d'efforts dynamiques à au moins deux balourds.

Cependant, on cherche régulièrement à améliorer ce type de générateurs d'efforts dynamiques, notamment pour en réduire la masse, en augmenter la compacité (encombrement réduit), mais aussi pour en améliorer la durée de vie.

Un objectif de l'invention est de proposer un générateur d'efforts dynamiques à au moins deux balourds amélioré.

En particulier, un objectif plus précis de l'invention est de proposer un générateur d'efforts dynamiques à au moins deux balourds dans lequel la masse et l'encombrement sont réduits et la durée de vie améliorée.

Un autre objectif est de proposer un actionneur comprenant de tels générateurs.

A cet effet, l'invention propose un générateur d'efforts dynamiques comportant :
- un axe de support ;
- un premier rotor comprenant :
   un alésage interne logeant ledit axe de support et au moins deux roulements ou, selon le cas, au moins deux rangées d'aiguilles, agencé(e)s entre l'axe de support et l'alésage interne de sorte que le premier rotor est monté à rotation par rapport audit axe de support,
   un alésage externe décalé radialement et axialement par rapport à l'alésage interne et comprenant une face interne soit munie d'un premier ensemble d'aimants permanents soit crénelée et réalisée en matériau ferromagnétique,
   une zone de connexion entre les alésages interne et externe du premier rotor, ladite zone de connexion étant apte, avec l'alésage externe, à définir un espace destiné à loger un électroaimant apte à coopérer avec le premier ensemble d'aimants permanents ou, selon le cas, avec ladite face interne crénelée et réalisée en matériau ferromagnétique de l'alésage externe de ce premier rotor, afin de constituer un moteur électrique pour le premier rotor,
- un premier balourd fixé à ou venu de matière avec l'alésage interne du premier rotor et monté en vis-à-vis d'une face externe de l'alésage externe du premier rotor ;
- un deuxième rotor monté à rotation par rapport au premier rotor, par l'intermédiaire d'un composant antifriction prévu entre le premier rotor et le deuxième rotor, ce deuxième rotor comprenant :
   un alésage interne logeant l'alésage interne du premier rotor, de sorte que lesdits alésages internes du premier et du deuxième rotors sont concentriques,
   un alésage externe décalé radialement et axialement par rapport à l'alésage interne et comprenant une face interne soit munie d'un deuxième ensemble d'aimants permanents, soit crénelée et réalisée en matériau ferromagnétique,
   une zone de connexion entre les alésages interne et externe du deuxième rotor, ladite zone de connexion étant apte, avec l'alésage externe, à définir un espace destiné à loger un électroaimant apte à coopérer avec le deuxième ensemble d'aimants permanents ou selon le cas, ladite face interne crénelée et réalisée en matériau ferromagnétique de l'alésage externe de ce deuxième rotor, afin de constituer un moteur électrique pour le deuxième rotor; et
- un deuxième balourd fixé à ou venu de matière avec l'alésage interne du deuxième rotor et monté en vis-à-vis d'une face externe de l'alésage externe du deuxième rotor.

Ce générateur d'efforts dynamiques pourra également présenter l'une au moins des caractéristiques suivantes, prise seule ou en combinaison :
- ledit composant antifriction est un palier lisse, mettant par exemple en œuvre un revêtement antifriction, un traitement de surface ou de préférence un coussinet, agencé entre l'alésage interne du premier rotor et l'alésage interne du deuxième rotor ;
- ledit composant antifriction comporte au moins deux rangées d'aiguilles agencées entre l'alésage interne du premier rotor et l'alésage interne du deuxième rotor ;
- les roulements ou, selon le cas, les rangées d'aiguilles agencés entre l'axe de support et l'alésage interne du premier rotor et/ou le composant antifriction est(sont) centré(s) axialement ;
- les roulements agencés entre l'axe de support et l'alésage interne du premier rotor sont choisis parmi des roulements à billes, à aiguilles ou à rouleaux coniques, de préférence des rouleaux coniques ;
- l'alésage externe du premier et/ou du deuxième rotor est réalisé en un matériau ferromagnétique ;
- une première extrémité axiale de l'alésage interne du premier rotor, située à l'opposé de la zone de connexion correspondante, présente la forme d'au moins une rainure hélicoïdale dont le pas est orienté de façon à faire revenir de la graisse contenu dans ledit générateur vers les roulements ou, selon le cas, vers les rangées d'aiguilles ;
- un composant situé contre une paroi périphérique de l'alésage interne du premier rotor, ladite paroi périphérique formant une deuxième extrémité axiale de l'alésage interne du premier rotor, opposé à la première extrémité axiale, ledit composant étant muni d'au moins une rainure hélicoïdale présentant un pas opposé à celui de l'extrémité axiale de l'alésage interne du premier rotor ;
- l'alésage externe du premier et/ou du deuxième rotor comporte une piste magnétique, par exemple de forme annulaire ;
- pour chacun des premier et deuxième rotors, il comprend un capteur de température, avantageusement disposé sur l'axe de support ;
- le générateur comprend au moins un aimant permanent, dit d'indexation, agencé pour maintenir les balourds en opposition, selon un angle de 180°, lorsque le générateur est au repos, lesdits balourds étant à cet effet soit réalisés en un matériau ferromagnétique soit en un matériau amagnétique mais comportant alors une plaque ferromagnétique ;
- les balourds sont adjacents ou imbriqués ;
- les balourds étant adjacents, l'un au moins desdits balourds comprend, sur l'une au moins de ses faces latérales, un moyen d'amortissement, par exemple une pièce en caoutchouc ;
- les balourds étant adjacents, chaque balourd présente une section, prise dans un plan perpendiculaire à la direction de l'axe de de support en forme de demi-segment de disque.

L'invention concerne également un actionneur comprenant :
- au moins deux générateurs d'efforts dynamiques selon l'invention agencés de sorte que leurs axes de support sont parallèles ;
- un carter ; et pour chacun des deux générateurs d'efforts dynamiques :
- au moins un premier électroaimant, fixé sur le carter et logé dans un espace formé entre ledit carter, l'alésage externe et la zone de connexion entre les alésages interne et externe du premier rotor du générateur d'efforts dynamiques concerné, de sorte que ledit au moins un premier électroaimant est situé en vis-à-vis du premier ensemble aimants permanents ou, selon le cas, avec ladite face interne crénelée et réalisée en matériau ferromagnétique de l'alésage externe ;
- au moins un deuxième électroaimant, fixé sur le carter et logé dans un espace formé entre ledit carter, l'alésage externe et la zone de connexion entre les alésages interne et externe du deuxième rotor du générateur d'efforts dynamiques concerné, de sorte que ledit au moins un deuxième électroaimant est situé en vis-à-vis du deuxième ensemble d'aimants permanents ou, selon le cas, avec ladite face interne crénelée et réalisée en matériau ferromagnétique de l'alésage externe.

L'actionneur pourra comprendre l'une au moins des caractéristiques suivantes, prise seule ou en combinaison :
- l'axe de support de chaque générateur d'efforts dynamiques est fixé sur le carter ;
- l'actionneur comprend une carte électronique montée entre le carter et chaque électroaimant ;
- la carte électronique comporte, pour chaque rotor muni d'une série d'aimants permanents, trois cellules de Hall et un capteur de position apte à fournir une information de position angulaire à chaque tour du rotor concerné, par exemple un capteur top-tour.

L'invention sera mieux comprise et d'autres buts, avantages et caractéristiques de celle-ci apparaîtront plus clairement à la lecture de la description qui suit et qui est faite au regard des figures annexées suivantes :
- La figure 1 est une vue externe, en perspective, d'une partie d'un générateur d'effort dynamique selon un premier mode de réalisation de l'invention ;
- La figure 2 est une vue éclatée d'un générateur d'efforts dynamiques de l'actionneur représenté sur la figure 1 ;
- Les figures 3(a) et 3(b) représentent différentes vues de coupe du générateur d'efforts dynamiques dont une partie est représentée sur la figure 1, à savoir plus précisément une vue en coupe sur la figure 3(a), une vue en coupe partielle sur la figure 3(b) selon le plan de coupe de la figure 3(a)
- La figure 3(c) est une vue en coupe partielle d'un actionneur comportant deux générateurs d'efforts dynamiques tels que représentés sur les figures 3(a) et 3(b), agrandie, selon un plan de coupe perpendiculaire au plan de coupe de la figure 3(a) au niveau de l'un des générateurs d'efforts dynamiques ;
- La figure 4, qui comprend les figures 4(a) à 4(c), représente respectivement, sur la figure 4(a) une vue générale en perspective d'un actionneur comprenant deux générateurs d'efforts dynamiques selon les figures 1 à 3, sur la figure 4(b) une vue de face et en coupe de cet actionneur dans un premier état de fonctionnement et sur la figure 4(c), cette même vue de face de l'actionneur mais dans un deuxième état de fonctionnement ;
- La figure 5 représente une variante de réalisation du générateur d'efforts dynamiques représenté sur les figures 1 à 3, selon une vue en perspective tronquée ;
- La figure 6 représente une autre variante de réalisation du générateur d'efforts dynamiques représenté sur les figures 1 à 3, selon une vue en perspective tronquée ;
- La figure 7 est une vue éclatée, partielle, d'un générateur d'efforts dynamiques tel que représenté sur les figures 1 à 3 ;
- La figure 8 représente une variante de réalisation d'un générateur d'efforts dynamiques tel que représenté sur les figures 1 à 3 et 7, avec une conception particulière des balourds, et plus précisément une vue générale en perspective sur la figure 8(a) et une vue de face et de principe sur la figure 8(b) ;
- La figure 9 est une autre variante de réalisation d'un générateur d'efforts dynamiques tel que représenté sur les figures 1 à 3 et 7 ;
- La figure 10, qui comprend les figures 10(a) et 10(b), représente encore une autre variante du générateur d'efforts dynamiques représenté sur les figures 1 à 3 et plus précisément sur la figure 10(a), une première vue en coupe partielle et sur la figure 10(b) une deuxième vue en coupe partielle, selon le même plan de coupe de la figure 10(a) ;
- La figure 11 représente une variante de réalisation du moteur électrique envisageable pour un générateur d'efforts dynamiques conforme à l'invention ; et
- La figure 12 montre l'implantation de la carte électronique permettant la gestion de la commande du courant envoyé au stator de chaque moteur électrique présente dans un actionneur.

Les figures annexées sont représentées en référence à un repère orthogonal (O ; X, Y, Z). L'axe Z correspond à l'axe longitudinal du générateur d'efforts dynamiques et le plan (X ; Y) orthogonal, à l'axe longitudinal permet de définir toute direction radiale.

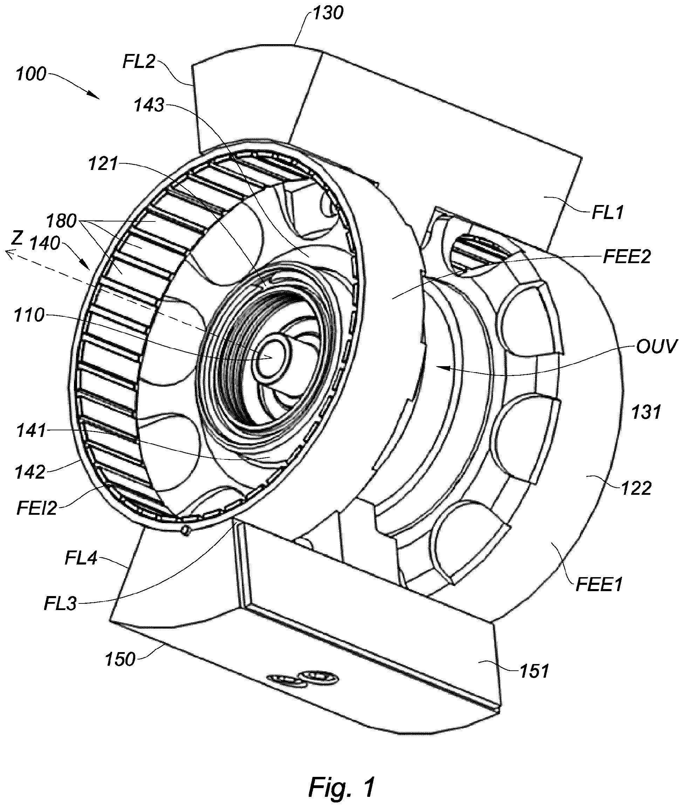

Un générateur 100 d'efforts dynamiques conforme à l'invention est représenté sur les figures 1 à 3.

Le générateur 100 d'efforts dynamiques comporte un axe de support 110, lequel est destiné à être fixé à un carter.

Le générateur 100 d'efforts dynamiques comporte également un premier rotor 120.

Le premier rotor 120 comprend un alésage interne 121 logeant ledit axe de support 110 et des roulements R1, R2 agencés entre l'axe de support 110 et l'alésage interne 121 de sorte que le premier rotor 120 est monté à rotation par rapport audit axe de support 110. La direction d'extension de l'axe de support 110 permet de définir la direction longitudinale (axe Z).

Le premier rotor 120 comprend un alésage externe 122.

Cet alésage externe 122 est décalé radialement par rapport à l'alésage interne 121. L'alésage externe 122 présente donc un diamètre plus grand que celui de l'alésage interne 121. Par ailleurs, l'alésage externe 122 est également décalé axialement par rapport à l'alésage interne 121.

L'alésage externe 122 comprend une face interne FIE1 munie d'un premier ensemble 180 d'aimants permanents. Les aimants sont donc agencés les uns à la suite des autres sur une face, à savoir la face FIE1 en forme d'anneau. Les aimants permanents présentent par ailleurs une polarité alternée lorsqu'on parcourt cette face périphérique. De plus, la polarisation des aimants est orientée pour agir radialement. Ces aimants peuvent être réalisés en NdFeB, notamment lorsque l'on souhaite obtenir les meilleures performances (couple) avec une masse et un encombrement les plus faibles possibles. Cet alésage externe 122 peut être mis à profit pour y monter, par exemple par l'intermédiaire d'une pièce rapportée, une piste magnétique PM, en l'occurrence en forme d'anneau, qui peut servir pour la mise en œuvre d'un capteur de position angulaire, comme cela sera expliqué plus loin.

Le premier rotor 120 comprend une zone de connexion 123 entre les alésages interne 121 et externe 122 du premier rotor. Cette zone de connexion 123 s'étend donc essentiellement radialement. Du fait du décalage axial et radial de l'alésage externe 122 par rapport à l'alésage interne 121, la zone de connexion 123 permet, avec l'alésage externe 122, de définir un espace logeant un électroaimant 170 apte à coopérer avec le premier ensemble 180 d'aimants permanents afin de constituer un moteur électrique pour le premier rotor 120. Cela sera expliqué de façon plus détaillée par la suite. On note cependant qu'avantageusement, la zone de connexion 123 est ajourée pour réduire la masse et améliorer le refroidissement de l'électroaimant.

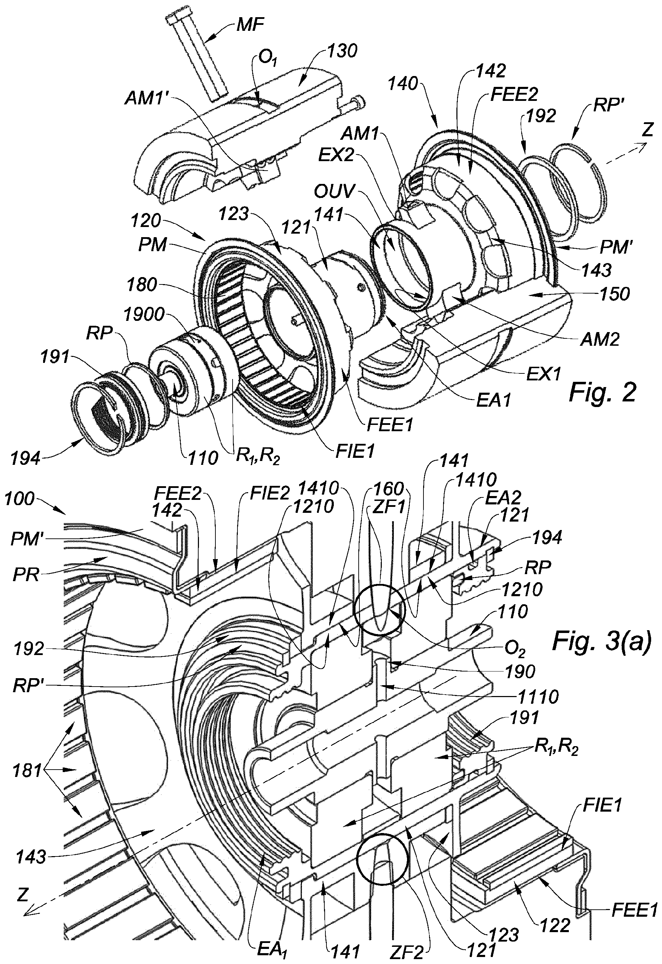

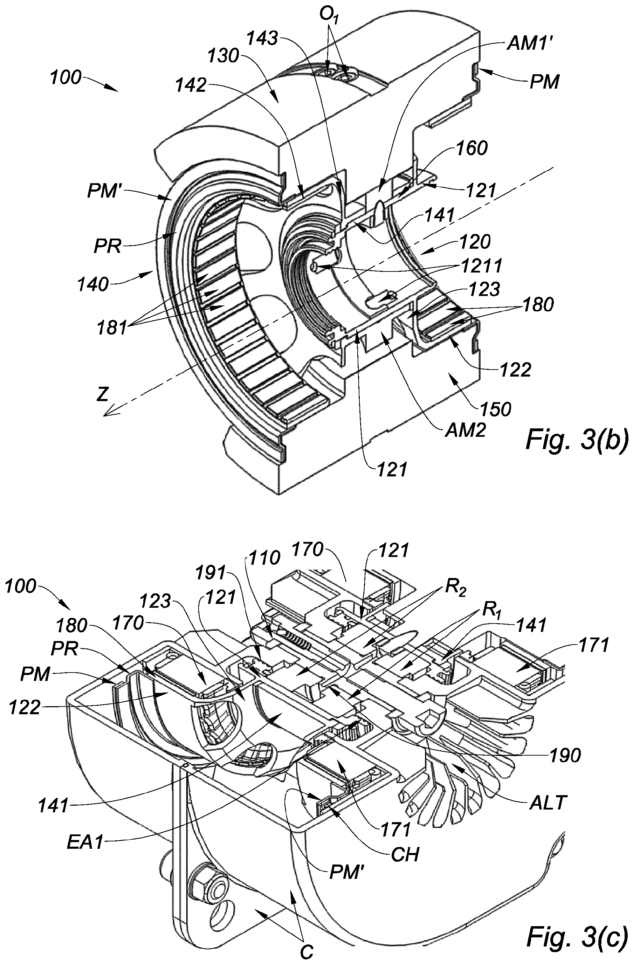

Le générateur 100 d'efforts dynamiques comprend aussi un premier balourd 130 fixé à l'alésage interne 121 du premier rotor 120. La zone de fixation ZF1 est représentée sur la figure 3(a). Cette fixation s'effectue à l'aide d'une ouverture O1 traversant le premier balourd 130 et d'une autre ouverture O2 réalisée dans l'alésage interne 121 du premier rotor 120. Ces ouvertures O1, O2 permettent de faire passer un moyen de fixation MF, par exemple constitué de boulons et/ou tirefonds. Par balourd, il convient de comprend une masse excentrée radialement par rapport à un axe longitudinal du générateur 100 d'effort dynamiques.

Le premier balourd 130 est par ailleurs monté en vis-à-vis d'une face externe FEE1 de l'alésage externe 122 du premier rotor 120. De ce fait, le premier balourd 130 se situe dans la proximité immédiate du premier ensemble 180 d'aimants permanents. En effet, le premier balourd 130 et le premier ensemble 180 d'aimants permanents sont situés de part et d'autre de l'alésage externe 122 du premier rotor 120. A cet égard, il est avantageux de prévoir que l'alésage externe 122 du premier rotor 120 comporte un matériau ferromagnétique ou, de préférence, soit réalisé en un matériau ferromagnétique. En effet, lorsque l'alésage externe 122 du premier rotor 120 est ferromagnétique, cela permet de reboucler le flux magnétique des aimants permanents du rotor. Ceci augmente donc le niveau d'induction dans l'entrefer rotor/stator et canalise le flux magnétique.

Par ailleurs, le générateur 100 d'efforts dynamiques comprend un deuxième rotor 140 monté à rotation par rapport au premier rotor 120.

Cette mise en rotation est rendue possible par l'intermédiaire d'un composant antifriction. Ce composant antifriction, quel que soit le mode de réalisation envisagé et décrit par la suite, présente l'avantage d'une plus grande compacité par rapport à l'emploi, classique, de roulements. Il permet également un gain de masse.

Par exemple, le composant antifriction peut être un palier lisse 160 prévu entre le premier rotor 120 et le deuxième rotor 140.

Par ailleurs, le deuxième rotor 140 comprend un alésage interne 141 logeant l'alésage interne 121 du premier rotor 120, de sorte que lesdits alésages internes 121, 141 du premier et du deuxième rotors 120, 140 sont concentriques.

Du fait de cette construction, et comme représenté sur les figures 1 à 3, le palier lisse 160 met en œuvre un revêtement antifriction déposé sur l'une au moins des surfaces 1210, 1410, se faisant face, de l'alésage interne 121 du premier rotor 120 et de l'alésage interne 141 du deuxième rotor 140. Ce revêtement antifriction permet de réduire le frottement du palier lisse.

En variante, le palier lisse 160 met en œuvre un traitement de surface, par exemple visant à durcir superficiellement l'une au moins des surfaces 1210, 1410. Ce durcissement peut s'obtenir par nitruration ionique. Ce durcissement permet notamment d'augmenter la durée de vie du palier lisse et peut par ailleurs contribuer à réduire encore plus le frottement du palier lisse.

On pourra prévoir un tel palier lisse sur les deux surfaces 1210, 1410.

Dans ce cas, il convient de noter que le type de palier lisse utilisé sur l'une des surfaces 1210, 1410 peut être différent de celui qui est utilisé sur la surface lui faisant face.

Ainsi, on peut prévoir un premier revêtement antifriction sur l'une des deux surfaces 1210, 140 et un deuxième revêtement antifriction, différent du premier revêtement antifriction, sur l'autre surface.

Ainsi également, on peut prévoir un premier traitement de surface sur l'une des deux surfaces 1210, 1410 et un deuxième traitement de surface, différent du premier traitement de surface, sur l'autre surface.

On peut encore prévoir un traitement de surface sur la surface 1210 et un revêtement antifriction sur l'autre surface 1410 ou inversement.

Quel que soit le type de palier lisse employé, l'un de ses intérêts réside dans son coefficient de frottement avec les alésages concernés. Typiquement, ce coefficient de frottement pourra être compris entre 0,03 et 0,05, et ce sans apport de lubrifiant de type huile ou graisse.

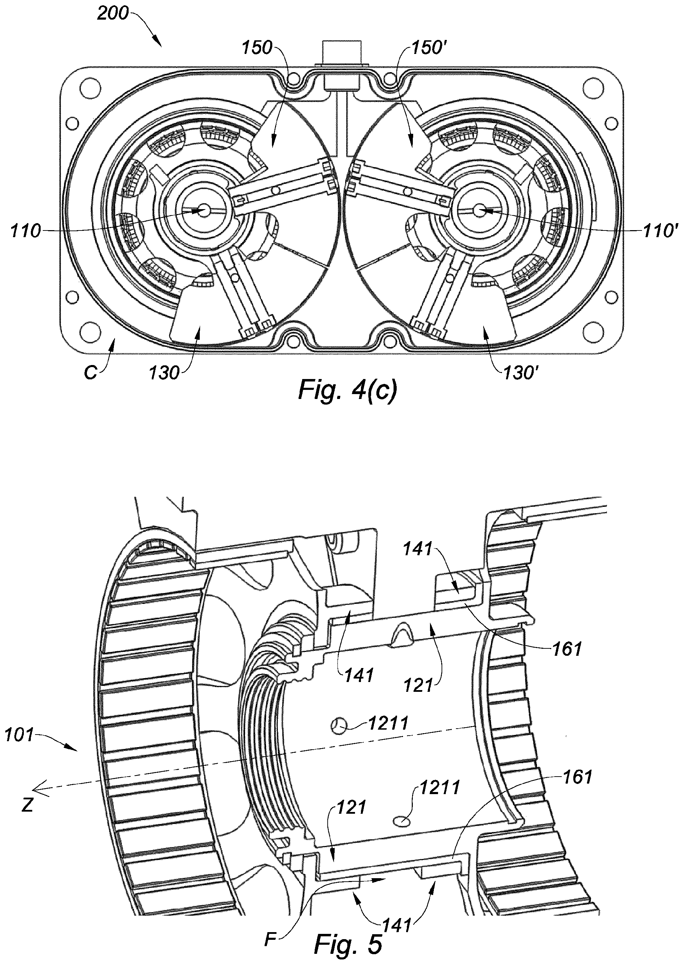

Une autre variante de réalisation d'un tel palier lisse 160 sera présentée ultérieurement à l'appui de la figure 5.

Par ailleurs, on note que l'alésage interne 141 du deuxième rotor 140 comporte une ouverture OUV périphérique, s'étendant par exemple sur un angle inférieur ou égal de 180°, avantageusement de 180°.Cette ouverture périphérique comprend deux extrémités EX1, EX2.

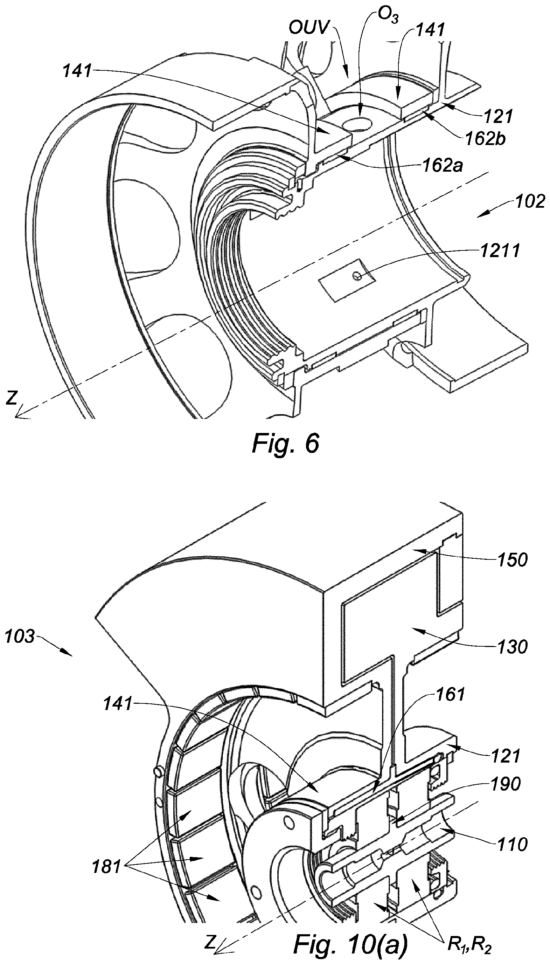

L'alésage interne 141 du deuxième rotor 140 logeant l'alésage interne 121 du premier rotor, le diamètre interne de l'alésage interne 141 du deuxième rotor 140 est légèrement plus grand que le diamètre externe de l'alésage interne 121 du premier rotor et de ce fait, l'ouverture OUV permet de faire passer le moyen de fixation MF pour que le premier balourd 130 puisse effectivement être fixé à l'alésage interne 121 du premier rotor 120. Par ailleurs, le moyen de fixation MF passe aussi à travers des orifices O3 (cf. figure 6 par exemple où un seul est visible, sachant par exemple que chaque boulon et/ou tirefond passera par l'un de ces orifices) du premier rotor 120 pour assurer sa fixation.

Le deuxième rotor 140 comprend également un alésage externe 142.

L'alésage externe 142 est décalé radialement par rapport à l'alésage interne 121. L'alésage externe 142 présente donc un diamètre plus grand que celui de l'alésage interne 141. Par ailleurs, l'alésage externe 142 est également décalé axialement par rapport à l'alésage interne 141.

L'alésage externe 142 comprend une face interne FIE2 munie d'un deuxième ensemble 181 d'aimants permanents. Les aimants sont donc agencés les uns à la suite des autres sur une face, à savoir la face FIE1 en forme d'anneau. Les aimants permanents présentent par ailleurs une polarité alternée lorsqu'on parcourt cette face périphérique. De plus, la polarisation des aimants est orientée pour agir radialement. Ces aimants peuvent être réalisés en NdFeB, notamment lorsque l'on souhaite obtenir les meilleures performances (couple) avec une masse et un encombrement les plus faibles possibles. L'alésage externe 142 peut être mis à profit pour y monter, par exemple par l'intermédiaire d'une pièce rapportée, une piste magnétique PM', en l'occurrence en forme d'anneau, qui peut servir pour la mise en œuvre d'un capteur de position angulaire, comme cela sera expliqué plus loin.

Le deuxième rotor 140 comprend aussi une zone de connexion 143 entre les alésages interne 141 et externe 142 du deuxième rotor. La zone de connexion 143 s'étend donc essentiellement radialement. Du fait du décalage radial et axial de l'alésage externe 142 par rapport à l'alésage interne 141, la zone de connexion 143 permet, avec l'alésage externe 142, de définir un espace logeant un électroaimant 171 apte à coopérer avec le deuxième ensemble 181 d'aimants permanents afin de constituer un moteur électrique pour le deuxième rotor 140. Comme représenté, la zone de connexion 143 est avantageusement ajourée pour réduire la masse et favoriser le refroidissement de l'électroaimant.

Enfin, le générateur d'efforts dynamiques 100 comporte un deuxième balourd 150 fixé à l'alésage interne 141 du deuxième rotor 140. La zone de fixation ZF2 est représentée sur la figure 3(a).

Le deuxième balourd 150 est par ailleurs monté en vis-à-vis d'une face externe FEE2 de l'alésage externe 142 du deuxième rotor 140. De ce fait, le deuxième balourd 140 se situe dans la proximité immédiate du deuxième ensemble 181 d'aimants permanents. En effet, le deuxième balourd 150 et le deuxième ensemble 181 d'aimants permanents sont situés de part et d'autre de l'alésage externe 142 du deuxième rotor 140. A cet égard, il est avantageux de prévoir que cet alésage externe 142 du deuxième rotor 140 comporte un matériau ferromagnétique ou soit réalisé en un matériau ferromagnétique.

Les deux balourds 130, 150 ont avantageusement une masse identique. Ceci peut par exemple être obtenu en définissant des balourds 130, 150 d'une part de formes identiques et d'autre part réalisés en un même matériau. Par exemple, les balourds 130, 150 peuvent être avantageusement réalisés dans la même nuance de Tungstène.

Les roulements R1, R2 peuvent être des roulements à billes, à aiguilles ou à rouleaux coniques.

Cependant, parmi les roulements envisageables, il s'agira avantageusement de roulements à rouleaux coniques, pour mieux résister à la charge et/ou gagner en compacité. En effet, la charge dynamique de base d'un roulement à rouleaux coniques est plus élevée que pour les autres types de roulements, à encombrement identique. Dans le cas où des rouleaux coniques R1, R2 sont envisagés, leur forme implique, en utilisation, que la force centrifuge appliquée par les balourds fait apparaître une composante axiale. Afin de maintenir les rouleaux coniques R1, R2 en place, mais aussi de garantir en permanence une absence de jeu dans le roulement, il est alors avantageux de mettre en œuvre un ressort de précontrainte RP (précontrainte axiale), de préférence de forme annulaire contre l'un au moins des rouleaux coniques R1, R2, auquel est associé un circlip 194. En pratique, on choisit le niveau de précontrainte axiale de sorte à compenser la composante d'effort axial générée, en utilisation, par la force centrifuge maximale.

L'écartement entre les deux roulements R1, R2 est assurée d'une part, par une excroissance 190, s'étendant radialement et réalisée sur l'axe 110 et d'autre part par une entretoise 1900.

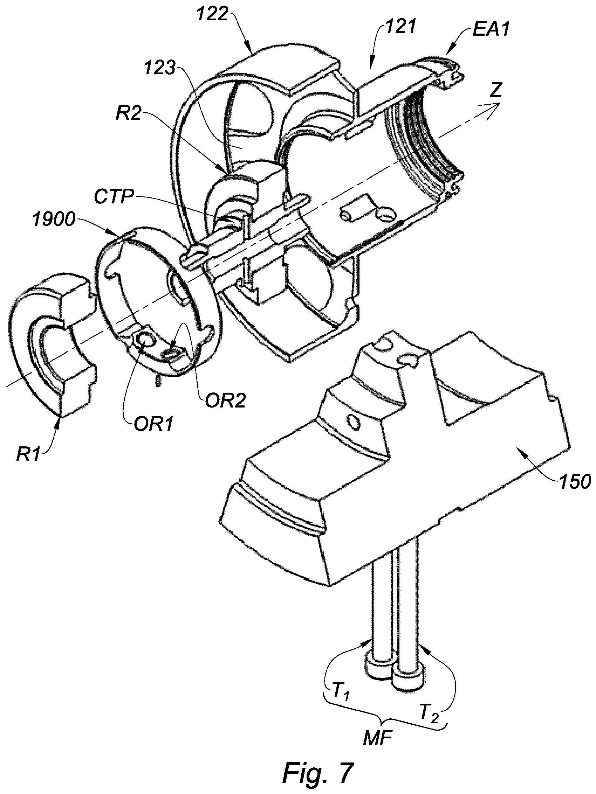

Cette entretoise 1900 est plus aisément identifiable sur la figure 7 (mais aussi sur les figures 3(a) et 3(c) notamment), la figure 7 étant une vue éclatée partielle du générateur 100 d'efforts dynamiques. L'entretoise 1900 est destinée à prendre prise avec des tirefonds avec le moyen de fixation MF, en l'occurrence des tirefonds T1, T2, passant à travers le balourd et comportant à cet effet des orifices OR1, OR2, se présentant par exemple sous la forme de trous taraudés formant un double écrou.

Par ailleurs, la forme même des alésages internes 121, 141 évite que ces roulements R1, R2 sortent vers l'extérieur, c'est-à-dire plus précisément dans une direction radiale externe. Dans la direction axiale, seul l'alésage interne 121 crée une butée.

Il convient de noter que l'axe central 110 est avantageusement creux, et comporte au moins une fente 1110 agencée radialement et traversante. Ceci est avantageux pour la maintenance, afin de permettre à un opérateur un re-graissage plus aisé des roulements R1, R2.

Des orifices 1211 présentant la même fonction sont alors avantageusement envisagés dans l'alésage interne 121 du premier rotor 120.

Par ailleurs, on peut envisager que l'extrémité axiale EA1 de l'alésage interne 121 du premier rotor 120 située à l'opposé de la zone de connexion 123 correspondante présente la forme d'au moins une rainure hélicoïdale. Cette rainure hélicoïdale présente une fonction d'étanchéité. En effet, en cas de migration de la graisse de lubrification des roulements R1, R2, le sens du pas de cette rainure hélicoïdale est orientée de façon à faire revenir la graisse vers le centre du générateur 100 d'efforts dynamiques, et finalement vers les roulements R1, R2.

Un circlip 192 est prévu pour assurer le blocage axial du deuxième rotor 140, et plus particulièrement de l'alésage interne 141 du deuxième rotor 140, par rapport à l'extrémité EA1 de l'alésage interne 121 du premier rotor 120. On notera que cette extrémité EA1 est alors avantageusement mise à profit pour comprimer et bloquer axialement le ressort de précontrainte RP', et de fait le circlip 192, contre l'alésage 141.

Un composant 191, également muni d'au moins une rainure hélicoïdale dont le pas est de sens opposé à la précédente, est alors avantageusement envisagé contre une paroi périphérique de l'alésage interne 121 du premier rotor. Cette paroi périphérique forme l'extrémité axiale EA2 de cet alésage interne 121, opposée à l'extrémité axiale EA1. Cette extrémité axiale EA2 est donc disposée du côté de la zone de connexion 123 correspondante du premier rotor 120. Le fait que le composant 191 est situé au niveau de l'extrémité EA2 opposée à l'extrémité EA1 et présente un pas opposé à celui de la rainure hélicoïdale de cette extrémité EA1 lui permet de remplir une fonction identique, à savoir de ramener la graisse vers les roulements R1, R2.

Là également, un circlip 194 est prévu pour assurer le maintien axial de ce composant 191 par rapport à l'alésage interne 121 du premier rotor 120. On notera que ce composant 191 est alors avantageusement mis à profit pour comprimer et bloquer axialement le ressort de précontrainte RP contre l'un R2 des roulements R1, R2.

Avantageusement, et comme représenté sur les figures 1 à 3, on peut envisager de mettre en œuvre un ou plusieurs aimants permanents AM1, AM2, dits d'indexation, agencés pour maintenir les balourds 130, 150 en opposition, selon un angle de ou voisin de 180°.

Ceci est notamment utile lorsque le générateur 100 d'efforts dynamiques n'est pas en fonctionnement (repos).

Pour cela, on peut soit prévoir un seul aimant permanent soit deux aimants permanents AM1, AM2 de polarité opposée sur l'alésage interne 141 du deuxième rotor 140. Le ou chaque aimant AM1, AM2 est avantageusement disposé à proximité des extrémités EX1, EX2 de l'ouverture périphérique OUV de l'alésage interne 141 du deuxième rotor 140.

Sur la figure 2, on peut noter la présence d'une plaque AM1' en matériau ferromagnétique, destinée à coopérer avec les aimants permanents AM1, AM2 dans le cas d'un matériau balourd amagnétique. Si le matériau formant un balourd est ferromagnétique, une telle plaque AM1' n'est plus nécessaire.

Ceci permet de s'assurer, lorsque le générateur 100 d'efforts dynamiques est mis en fonctionnement, que le démarrage s'effectue à balourd faible ou nul lorsque les masses respectives des balourds 130, 150 sont identiques et ce sans stratégie particulière de pilotage des moteurs.

En effet, au démarrage, la résultante de la force centrifuge générée par la paire de balourds reste nulle. En conséquence, au démarrage, on évite de solliciter certains modes vibratoires du générateur 100 d'efforts dynamiques tout en mettant en œuvre un minimum de courant et de puissance au niveau des moteurs. Plus précisément, les balourds étant ainsi liés au démarrage, les moteurs ne supportent alors pas de façon indépendante les oscillations de couple créées par leur balourd associé. Ceci permet de réduire les oscillations de courant à la fréquence de rotation, d'autant plus que la vitesse de rotation est alors relativement faible. Ceci est encore plus utile lorsque l'environnement augmente les pertes (par exemple : grand froid) et impose un surcroît de couple et/ou de puissance au démarrage.

Chaque balourd 130, 150 comprend deux faces latérales FL1, FL2, FL3, FL4. L'une au moins de ces faces latérales est munie d'un moyen d'amortissement 151, par exemple une pièce en caoutchouc. En effet, les balourds étant disposés de façon adjacente, ils peuvent venir en contact l'un de l'autre. Aussi, pour éviter un choc trop important entre deux faces latérales (FL1, FL3, par exemple) des deux balourds 130, 150, le moyen d'amortissement est d'intérêt.

Il convient de noter que la configuration « adjacente » des balourds 130, 150 permet d'éviter la génération de moments parasites au sein du générateur. En effet, en fonctionnement le premier balourd 130 génère une force centrifuge (radiale) passant par son centre de gravité et l'axe de support 110. Il en est de même pour l'autre balourd 150. Mais, du fait de ce montage « adjacent », les efforts générés par les deux balourds passent par le même point au niveau de l'axe de support 110.

Il convient également de noter que le montage par paires de balourds 130, 150 au sein du générateur 100 d'efforts dynamiques permet de limiter la sollicitation des roulements R1, R2 et donc d'augmenter leur durée de vie.

En effet, lorsqu'un générateur d'effort dynamiques ne comporte qu'un seul balourd, les roulements sont toujours sollicités radialement, en fonctionnement.

Ce n'est pas le cas avec une paire de balourds 130, 150 au sein d'un même générateur 100 d'efforts dynamiques. Ainsi, les roulements R1, R2 sont statistiquement moins sollicités puisque les balourds 130, 150 seront, en fonctionnement, parfois situés en opposition de phase (180°) avec pour conséquence l'application d'une force résultante (radiale) réduite sur les roulements R1, R2. Ceci est d'autant plus avantageux que le générateur d'efforts dynamiques sera en général destiné à générer une même amplitude de force dynamique maximale sur une large plage de fréquences. La force générée par un seul balourd étant proportionnelle au carré de sa fréquence de rotation, le gain en terme de vie normalisée est, en première approximation, proportionnelle au ratio (f₂/f₁)^6 où f₁ et f₂ sont respectivement les fréquences minimale et maximale dans la plage de fréquences considérée. En termes d'application, il convient de noter que les aéronefs à voilure tournante (hélicoptères) tendent aujourd'hui de plus en plus à s'équiper d'un rotor principal à fréquence de rotation variable. Par ailleurs, il convient de noter que, pour une durée de vie donnée, il est possible avec la solution proposée de réduire la capacité de charge d'un roulement et ainsi de réduire sa masse et son encombrement.

On notera enfin que sur les figures 1 à 3, les balourds sont fixés à l'alésage interne correspondant. Cependant, dans une variante de réalisation, on pourrait prévoir, bien que plus difficilement réalisable techniquement, que le balourd 130 soit venu de matière, c'est-à-dire formé d'une seule pièce, avec l'alésage interne 121 du premier rotor 120. Une remarque similaire peut être faite avec le balourd 150 et l'alésage interne 141 du deuxième rotor 140.

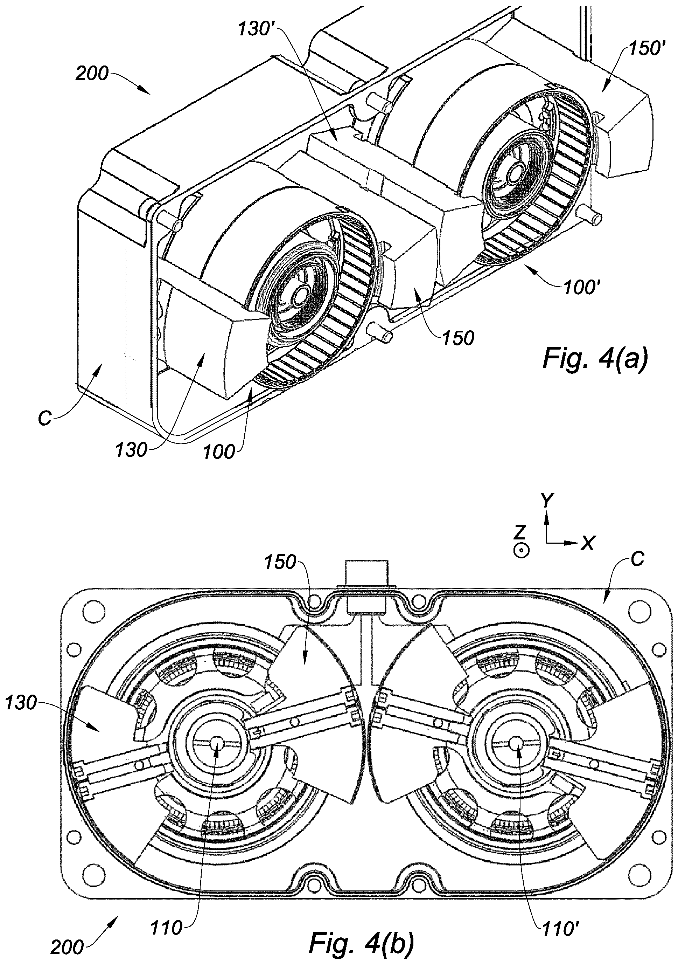

Un actionneur 200 comprenant deux générateurs d'efforts dynamiques 100, 100', chacun conforme à celui qui est représenté sur les figures 1 à 3 est représenté sur la figure 4.

Le générateur 100' d'efforts dynamiques n'est donc pas représenté en détail.

Plus précisément, cet actionneur 200 comprend :
- au moins deux générateurs 100, 100' d'efforts dynamiques tels que décrits précédemment, les axes de support 110, 100' étant agencés parallèlement ;
- un carter C; et
pour chacun des deux générateurs 100, 100' d'efforts dynamiques :
- au moins un premier électroaimant 170 (bobinage électrique monté sur une composant ferromagnétique propre) fixé sur le carter C et logé dans un espace formé entre ledit carter C, l'alésage externe 122, 122' et la zone de connexion 123, 123' entre les alésages interne 121 et externe 122 du premier rotor 120 du générateur 100, 100' concerné de sorte que ledit au moins un premier électroaimant 170 est situé en vis-à-vis du premier ensemble 180 d'aimants permanents ;
- au moins un deuxième électroaimant 171 (bobinage électrique monté sur une composant ferromagnétique propre) fixé sur le carter C et logé dans un espace formé entre ledit carter C, l'alésage externe 142 et la zone de connexion 143 entre les alésages interne 141 et externe 142 du deuxième rotor 140 du générateur 100, 100' d'efforts concerné de sorte que ledit au moins un deuxième électroaimant 171 est situé en vis-à-vis du deuxième ensemble 181 d'aimants permanents.

Comme on peut le comprendre, la conception particulière d'un générateur d'effort dynamiques, notamment pour chaque rotor 120, 140, des décalages radial et axial entre les alésages permet d'intégrer et ce de manière compacte, un moteur électrique (électroaimant/ aimants permanents).

Les axes de support 110, 100' peuvent être montés sur le carter C. En variante, et comme expliqué précédemment, on peut envisager que les axes de support 110, 110' soient montés, non pas sur le carter C, mais sur la structure pour laquelle on cherche à réduire les vibrations. Dans ce dernier cas, le carter est également monté sur la structure pour laquelle on cherche à réduire les vibrations.

Sur la figure 4(a), l'actionneur 200 est représenté au repos (les balourds 130, 150 d'une part et les balourds 130', 150' d'autre part étant positionnés en opposition, à 180°).

Sur la figure 4(b), l'actionneur 200 est représenté en fonctionnement, dans une position générant un effort global nul (cette position est d'ailleurs assimilable à la position de repos illustrée sur la figure 4(a)).

Sur la figure 4(c), l'actionneur 200 est représenté en fonctionnement, mais dans une position générant un effort maximal.

L'actionneur 200 peut être prévu pour que l'axe de support 110, 110' de chaque rotor 120, 140 soit fixé sur le carter C. C'est d'ailleurs cette conception qui est représentée sur la figure 3(c).

Cependant, pour chacun des deux générateurs 100, 100' d'efforts dynamiques, il est particulièrement avantageux de ne prévoir aucune fixation de l'axe de support 110, 110' sur le carter C. Dans ce cas, l'axe de support 110, 110' de chaque rotor 120, 140 est montée directement sur la structure dont on cherche à réduire les vibrations, par exemple un fuselage d'aéronef, notamment un fuselage d'aéronef à voilure tournante (hélicoptère). Cela permet d'alléger grandement le poids du carter C, car dans ce cas, le carter C n'a pas à être conçu pour supporter les efforts générés par chaque générateur 100, 100' d'efforts dynamiques.

Un générateur d'efforts dynamiques 101 selon une variante de réalisation est représenté sur la figure 5.

Dans cette variante, et par rapport à ce qui a été décrit précédemment, seul le palier lisse change. En effet, dans cette variante de réalisation, il n'est pas prévu de mettre en œuvre un revêtement antifriction ou un traitement de surface, mais à la place un palier lisse de type « coussinet » 161 agencé entre le premier rotor 120 et le deuxième rotor 140 et plus précisément entre l'alésage interne 121 du premier rotor 120 et l'alésage interne 141 du deuxième rotor 140.

Ce coussinet 161 peut par exemple être réalisé en bronze, éventuellement avec des inserts graphite. Il peut, en variante, être réalisé en acier avec un revêtement ou un traitement de surface tels que ceux présentés précédemment.

Par rapport à l'emploi d'un revêtement antifriction ou d'un traitement de surface, l'emploi d'un coussinet 161 présente, a priori, l'avantage de s'assurer que les rotors pourront maintenir un mouvement de rotation sur une durée plus longue, ce coussinet formant une pièce d'usure. Par ailleurs, cela facilite la maintenance car lorsque le coussinet 161 est usé, il suffit de le changer.

Pour le reste, le coussinet présente les mêmes avantages que les autres types de palier lisse décrits précédemment, en particulier sur le coefficient de frottement attendu avec les alésages concernés.

Un autre générateur d'efforts dynamiques 102 selon une autre variante de réalisation est représenté sur la figure 6.

Dans cette variante, et par rapport à ce qui a été décrit précédemment à l'appui des figures 1 à 4, seul le composant antifriction change. En effet, dans cette variante de réalisation, il est prévu de mettre en œuvre au moins deux rangées d'aiguilles 162a, 162b (rangées d'aiguilles seules ou avec leur cage associée pour former des roulements à aiguilles), en tant que composant antifriction. En pratique, le palier lisse 160, 161 est donc remplacé par au moins deux rangées d'aiguilles, disposées de part et d'autre de l'orifice O3 du premier rotor, et dans le même temps de l'ouverture périphérique OUV du deuxième rotor 140. A cet effet, il convient de prévoir, dans l'axe 110, des réceptacles pour les aiguilles.

Par rapport à l'emploi d'un palier lisse, l'emploi de rangées d'aiguilles 162a, 162b a, a priori, l'avantage de s'assurer que les rotors 120, 140 pourront maintenir un mouvement de rotation sur une durée plus longue, en particulier encore plus longue qu'avec un coussinet. Il convient de noter en outre que les aiguilles présentent une épaisseur relativement faible et ne sont donc que peu impactant, au moins par rapport à l'emploi d'un palier lisse, sur l'encombrement radial du générateur d'efforts dynamiques.

De plus, avec des rangées d'aiguilles, on peut envisager un coefficient de frottement 10 fois plus faible qu'avec un palier lisse, donc typiquement entre 0,003 et 0,005, toutes choses égales par ailleurs.

Ceci est intéressant car, en fonctionnement, on n'aura en pratique moins de puissance à fournir pour modifier, au sein d'un générateur d'efforts dynamiques donné, le positionnement des balourds l'un par rapport à l'autre.

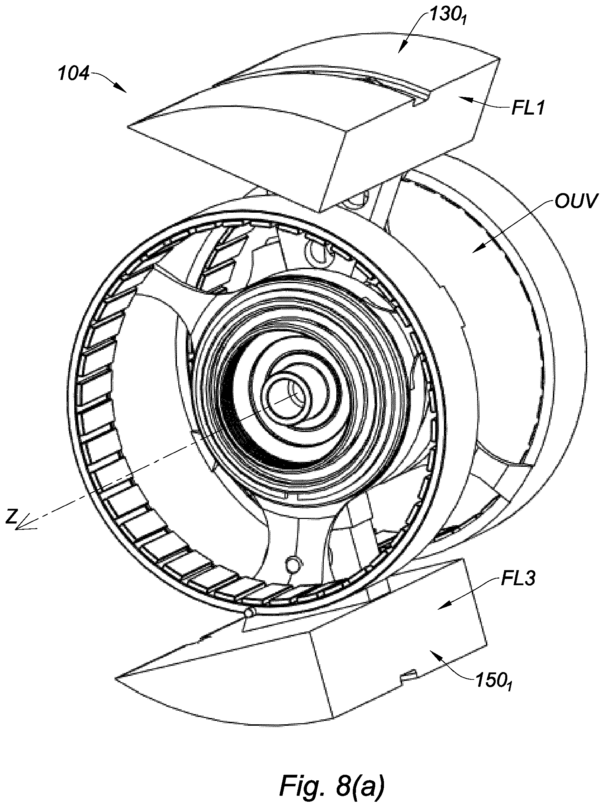

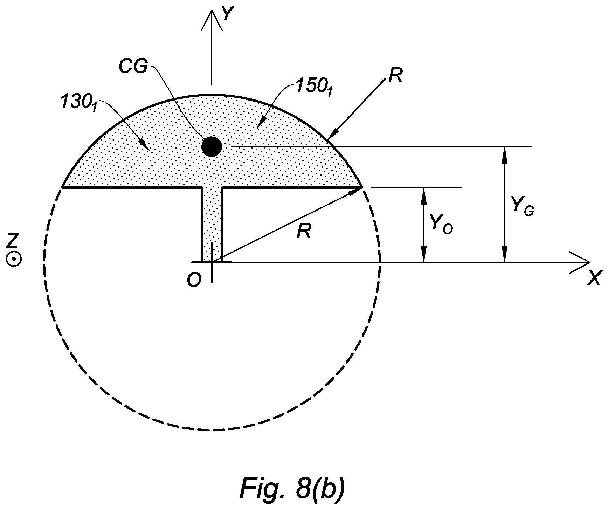

Une autre variante de réalisation est représentée sur la figure 8, laquelle comporte les figures 8(a) et 8(b).

Dans celle-ci, et en comparaison aux figures précédentes, le générateur d'efforts dynamiques 104 présente des balourds, adjacents, dont la forme est différente de celles présentées sur les figures précédentes. En effet, sur les figures 8(a) et 8(b), les balourds 130₁, 150₁ présentent chacun une section, prise dans le plan perpendiculaire à l'axe 110, en forme de demi-segment de disque, dont les faces latérales FL1, FL3 respectives, planes, sont susceptibles de venir au contact l'une contre l'autre, éventuellement par l'intermédiaire d'un moyen d'amortissement (non représenté sur la figure 8). Autrement dit, et comme visible sur la figure 8(b), lorsque les deux balourds 130₁, 150₁ sont au contact, ils définissent ensemble, une section en forme de segment de disque.

Cette conception permet de maximiser le rapport force/masse généré par les deux balourds 130₁, 150₁ (pris ensemble). En effet, ce rapport s'écrit Y_{G}ω² où Y_{G} est la distance entre le centre de rotation O (situé sur l'axe 110) et la position du centre de gravité C_{G} des deux balourds 130₁, 150₁ pris ensemble et ω la vitesse de rotation des deux balourds. Cela revient donc à maximiser la valeur de Y_{G}. Maximiser Y_{G} revient à « remplir » la région située au-dessus de Y_{O}. On cherche donc incidemment à maximiser Y0. Comme cette région est par ailleurs limitée par le cercle de rayon R, qui correspond à l'enveloppe d'encombrement maximal des balourds 130₁ et 150₁), on aboutit à remplir une région qui correspond à segment de disque.

Autrement dit, avec cette conception particulière, on peut générer un effort maximal, pour une masse et une densité données de l'ensemble des deux balourds. A contrario, si compte tenu de l'application envisagée, l'effort maximal à générer est défini, on peut minimiser la masse totale des deux balourds, par rapport aux conceptions précédentes. Ceci est avantageux car cela permet d'alléger le générateur d'efforts dynamiques sans grever ses performances. Ceci est particulièrement intéressant pour une applications aux aéronefs, en particulier aux aéronefs à voilure tournante (hélicoptère), dont les performances sont très sensibles à la masse.

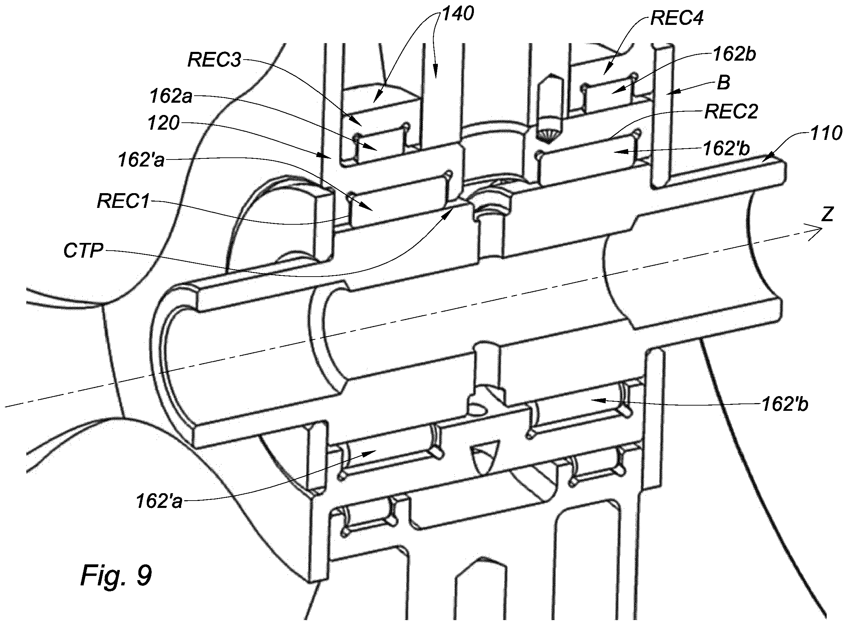

Un autre générateur d'efforts dynamiques selon une variante de réalisation est représenté sur la figure 9.

Dans cette variante, chaque roulement R1, R2 est remplacé par une rangée d'aiguilles 162'a, 162'b (i.e. un roulement à aiguilles sans la cage associée). Dans cette conception, le ressort de précontrainte RP n'est plus nécessaire, ni le circlip 194 associé.

Cette conception présente plusieurs avantages.

Elle offre une solution encore plus compacte. Cette compacité implique également une réduction du diamètre de guidage en rotation, donc des pertes et de la puissance consommée pour l'entraînement des balourds.

Elle offre également une solution plus légère par rapport à la mise en œuvre de roulements complets.

Elle offre aussi une solution plus simple. En effet, le ressort de précontrainte et le circlip sont remplacés par une butée B, si bien que le montage est simplifié.

Les rangées d'aiguilles 162'a, 162'b, 162a, 162b, sont alors guidées par des réceptacles REC1, REC2, REC3 et REC4, respectivement. Avantageusement, les réceptacles REC1, REC2 sont réalisés dans les alésages de guidage du balourd associé au rotor 120 et ce, comme représenté sur la figure 9, plutôt que dans l'axe 110 afin de bénéficier de la retenue du lubrifiant sous l'effet de la force centrifuge.

Par ailleurs, avantageusement et comme représenté sur la figure 9, deux autres rangées d'aiguilles (qui peuvent éventuellement être munies de leur cage pour former des roulements à aiguilles, mais avantageusement sans leur cages respectives) sont prévues entre les deux rotors, de manière analogue à ce qui a été décrit à l'appui de la figure 6.

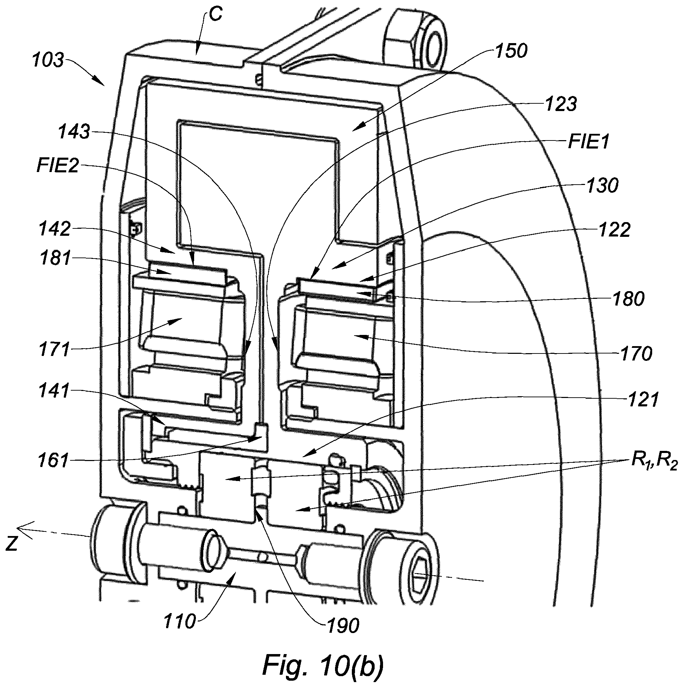

On notera que cette variante de réalisation peut bien entendu mettre en œuvre des balourds 130₁, 150₁ présentés sur les figures 8(a) et 8(b). Encore un autre générateur d'efforts dynamiques 103 selon une variante de réalisation est représenté sur la figure 10.

Dans cette variante, les balourds 130, 150 ne sont plus adjacents mais imbriqués. Pour autant, dans cette variante, il n'y a pas non plus de moment parasite pour les raisons mentionnées précédemment.

Par ailleurs, sur cette figure 10 le balourd 130 est venu de matière avec l'alésage interne 121 du premier rotor 120. Cela signifie que l'alésage interne 121 du premier rotor est fait d'une seule pièce avec le balourd 130. On pourrait cependant prévoir, comme sur les figures précédentes, un balourd 130 fixé à l'alésage interne 121 du premier rotor 120.

De manière similaire, sur cette figure 10, le balourd 150 est venu de matière avec l'alésage interne 141 du deuxième rotor 140. Cela signifie que l'alésage interne 141 du deuxième rotor est fait d'une seule pièce avec le balourd 150. On pourrait cependant prévoir, comme sur les figures 1 à 6, un balourd 150 fixé à l'alésage interne 141 du deuxième rotor 140.

De plus, si sur la figure 10, on a représenté le cas où un palier lisse 161 est employé comme composant antifriction, le composant antifriction pourrait en variante être formé par des rangées d'aiguilles telles que décrites précédemment.

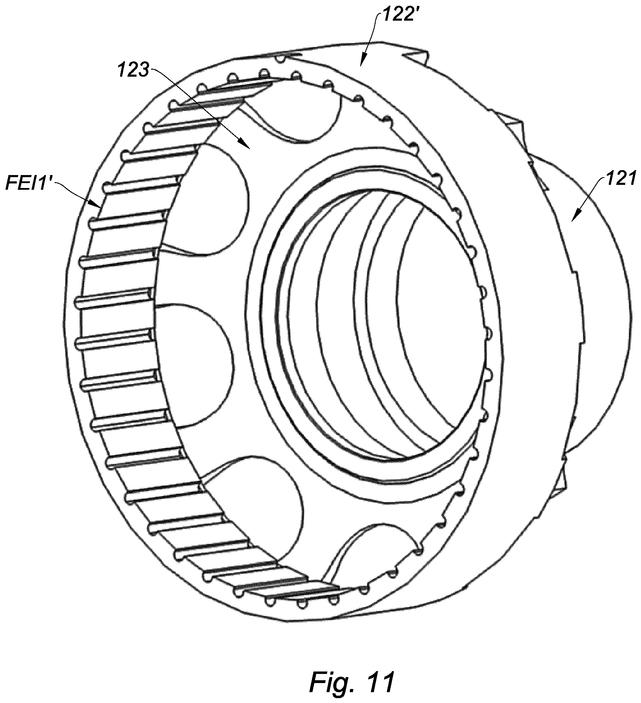

La figure 11 représente une vue partielle d'un générateur d'efforts dynamiques non muni d'un ensemble 180, 181 d'aimants permanents sur la face interne FEI1, FEI2 de l'alésage externe 122, 142 du rotor concerné 120, 140.

A la place, on prévoit une face interne FEI1' crénelée. Il convient alors que cette face interne FEI1' soit réalisée en un matériau ferromagnétique. Ceci peut s'effectuer en prévoyant un alésage externe réalisé en un matériau ferromagnétique ou encore, par le dépôt d'un revêtement de surface ferromagnétique sur cette face interne FEI1'.

Le reste est inchangé.

Ceci permet de définir un moteur à réluctance variable.

Quel que soit le mode de réalisation envisagé, on notera qu'un générateur d'efforts dynamiques conforme à l'invention prévoit des électroaimants (= bobinages électriques 170, 171 sur son composant ferromagnétique propre ; stator) plus centraux (radialement) que les ensembles 180, 181 d'aimants permanents ou, selon le cas, des faces crénelées ferromagnétiques, qui sont plus excentrés. Il convient de rappeler que ceci est rendu possible par l'excentration radiale et axiale de l'alésage externe 122, 142 par rapport à l'alésage interne 121, 122 qui permet, avec la zone de connexion 123, 143 de définir un espace pour loger les électroaimants 170, 171.

Autrement dit, le stator est à l'intérieur et le rotor à l'extérieur (radialement). Plus précisément encore, avec la conception proposée ici, les ensembles 180, 181 d'aimants permanents ou selon le cas, les créneaux ferromagnétiques sont placés sur le plus grand diamètre disponible à l'intérieur de la trajectoire des balourds, ces derniers, définissant l'encombrement du générateur d'efforts dynamiques, étant seulement séparés par l'épaisseur de l'alésage externe, des aimants permanents ou des créneaux ferromagnétiques.

Cet agencement permet d'avoir un couple d'entraînement le plus élevé possible pour un encombrement donné.

Par ailleurs, quel que soit le mode de réalisation envisagé, on note que des roulements R1, R2 ne sont employés qu'entre l'axe 110, 110' de support et le premier rotor 120. Pour assurer la rotation entre les deux rotors 120, 140 d'un même générateur d'effort dynamiques, l'invention prévoit un composant antifriction 160, 161 qui implique nettement moins d'encombrement et moins de masse que la mise en œuvre de roulements additionnels tels que des roulements coniques.

Le fait, par ailleurs que ce composant antifriction 160, 161, est situé entre les deux rotors 120, 140 le déporte radialement par rapport aux roulements R1, R2. Cela permet au composant antifriction d'avoir une certaine surface de contact qui lui permet de subir moins de contrainte (force centrifuge/divisé par surface de contact de ce composant antifriction), ce qui est favorable à sa durée de vie et donc à celle du générateur d'efforts dynamiques.

De manière complémentaire, toujours quel que soit le mode de réalisation envisagé, les roulements R1, R2 ainsi que le composant antifriction 160, 161 (palier lisse selon différentes conceptions ou aiguilles) sont avantageusement, et comme représenté sur les figures annexées, centrées axialement. Autrement dit, en fonctionnement, la force résultante (radiale) liée aux deux balourds au sein d'un même générateur d'efforts dynamiques est bien répartie à la fois sur les roulements R1, R2 et sur le composant antifriction 160, 161. Ceci est favorable à la durée de vie d'un générateur d'efforts dynamiques.

De plus, il convient de noter que l'utilisation d'un tel composant antifriction 160, 161 prendra encore plus d'intérêt lorsque les rotors 120 , 140 d'un même générateur d'efforts dynamiques sont entraînés en co-rotation. Et dans ce cas, il convient de faire en sorte que les rotors co-rotatifs d'un générateur 100 d'efforts dynamiques donné, soient en contra-rotation avec ceux de l'autre 100' générateur d'efforts dynamiques. En effet, dans ces conditions, les vitesses relatives entre les deux rotors 120, 140 d'un même générateur d'efforts dynamiques restent dans une plage modeste et le plus souvent faibles à nulles. Le composant antifriction 160, 161 est donc globalement peu sollicité. Cela justifie encore un peu plus, si besoin était, l'intérêt de l'absence de roulements additionnels.

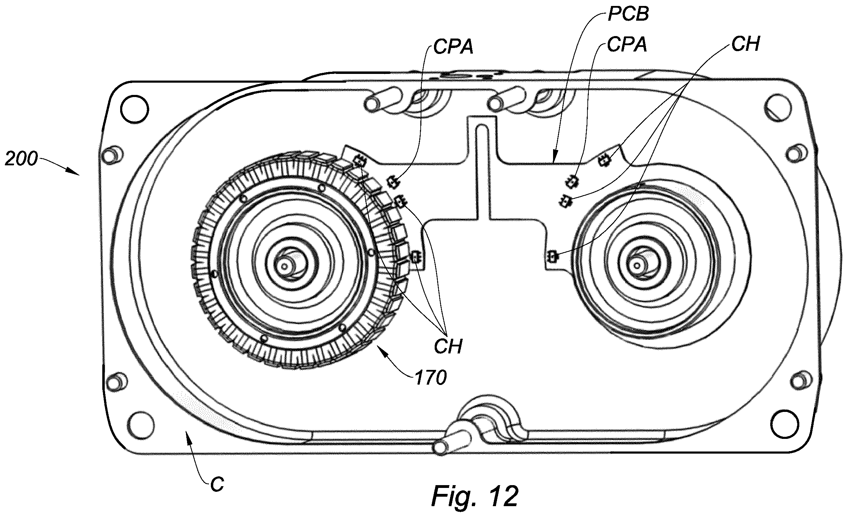

La figure 12 montre l'implantation de la carte électronique PCB, au sein d'un actionneur 200, pour la gestion de la commande des stators (un seul électroaimant 170 de stator est représenté sur la figure 12).

La configuration décrite à l'appui de la figure 12 est utilisable avec les modes de réalisation mettant en œuvre des aimants permanents sur chaque rotor, donc exclut la réalisation décrite à l'appui de la figure 11.

La carte électronique PCB est montée entre le carter C et chaque électroaimant 170.

Cette carte électronique PCB permet de fournir facilement le courant électrique vers chaque bobine électrique dont les extrémités sont soudées à cette carte.

Pour un stator donné, la commutation électrique d'une bobine à l'autre est avantageusement gérée à partir de cellules CH de Hall, montées sur la carte électronique PCB, et fonctionnant en mode tout ou rien. Sur la figure 12, on note par exemple la présence de trois cellules CH de Hall pour le stator 170, afin de fonctionner en triphasé (3 bobines par stator).

Pour assurer le contrôle de la phase, chaque rotor peut être muni d'un capteur CPA fournissant une information de position angulaire à chaque tour du rotor concerné. Ce capteur CPA peut par exemple être un capteur top-tour.

Dans le cas où des aimants permanents (« brushless ») sont employés pour les rotors et avec une alimentation en courant par bloc (les 3 bobines élémentaires d'un stator reçoivent un courant ou non selon la position relative rotor/stator), les cellules CH de Hall peuvent alors être basculées sous l'effet de l'alternance du champ magnétique axial (Nord/Sud) engendré par la rotation des rotors. Dans ce cas, les cellules CH de Hall peuvent être exploitées en association avec le capteur CPA pour créer un capteur de position absolue.

On évite alors l'emploi d'un capteur de position absolue rapporté sur le générateur d'effort dynamiques.

En effet, les signaux fournis par les cellules CH de Hall produisent un signal d'horloge dont chaque front montant ou descendant indique un incrément angulaire.

Ainsi et par exemple, la résolution angulaire d'un tel ensemble de capteurs (les 3 cellules de Hall plus le capteur CPA) peut atteindre, pour N = 20 paires de pôles Nord/Sud, une valeur de 3°. Cette résolution est compatible avec une application visant à contrebalancer les effets vibratoires néfastes d'un rotor (principal ou secondaire) d'un aéronef à voilure tournante (hélicoptère). Par ailleurs, le sens de rotation à appliquer à chaque balourd peut être déterminé à chaque front d'horloge des signaux fournis pas les cellules CH de Hall.

Il convient de noter que la piste magnétique PM, PM', lorsqu'elle est prévue, peut alors être mise à profit pour augmenter la précision du capteur (à résolution constante) en palliant la qualité une éventuelle qualité moyenne du signal magnétique engendré par les aimants permanents du rotor. Cette piste magnétique PM, PM' peut aussi être mise à profit pour augmenter si besoin la résolution angulaire du capteur.

En alternative, on peut gérer la commutation entre les différentes bobines d'un stator avec une alimentation en courant alternatif (sinusoïdal de préférence), et non par blocs. Ceci permet de générer un peu plus de couple, à puissance consommée équivalente et en régime permanent, et de diminuer légèrement la bruyance acoustique du fait notamment de l'absence d'ondulation du couple moteur.

Dans cette alternative, les cellules de Hall CH ne sont pas nécessaires puisque la commutation est gérée autrement. Par ailleurs, il convient avantageusement alors, dans cette alternative, de prévoir un capteur de position angulaire absolue. La carte électronique (non représentée) s'en trouve modifiée, mais reste néanmoins montées entre le carter C de l'actionneur 200 et chaque électroaimant 170, 171.

Un tel capteur de position angulaire absolue peut prendre différentes formes.

Ainsi, on peut envisager un capteur de position absolue de type « resolver », lequel est basé sur un principe électromagnétique. On peut aussi envisager le capteur de position absolue proposé dans le document FR 3 031 589, lequel est basé sur un principe inductif. On peut encore envisager de mettre à profit la piste magnétique PM, PM' associée à un rotor. Le champ magnétique créé par la piste magnétique PM, PM' peut directement se substituer à celui créé par les aimants permanents pour assurer la commutation.

Dans cette alternative, on profite alors du signal de position fourni par le capteur de position absolue pour connaître la position angulaire de chaque balourd et également assurer le pilotage de la commutation des bobines, qui s'effectue alors avec l'alimentation en courant alternatif.

Avec ce type de commutation (courant alternatif), les aimants permanents ne sont pas nécessaires pour assurer la commutation. Cela n'exclut pas pour autant de mettre en œuvre des aimants permanents dans cette variante pour assurer l'entraînement des rotors, seulement, ces aimants permanents ne sont pas mis à profit pour la commutation.

Pour cette raison, l'alternative décrite ci-dessus est notamment envisageable avec un moteur à réluctance variable (figure 11 ; absence d'aimants permanents)..

On peut aussi mettre en œuvre, pour le moteur, une solution dite hybride, dans laquelle on combine la réluctance variable aux aimants permanents. Dans ce cas, la commutation peut s'effectuer indifféremment par blocs ou en courant alternatif.

L'actionneur 200 comporte quatre stators, quatre rotors et quatre balourds. La carte électronique, par exemple la carte électronique PCB représentée sur la figure 12, permet donc d'assurer une commande indépendante des quatre stators et donc des quatre rotors et des quatre balourds. Ceci permet de contrôler l'amplitude, la direction et la phase de la force résultante des quatre balourds. La vitesse de rotation de chaque balourd peut être fournie par une référence commune, qui peut par exemple être donnée, dans le cas d'application à un aéronef, par un capteur de fréquence fournissant la fréquence de rotation du moteur de l'aéronef, par exemple du rotor principal pour un hélicoptère.

Enfin, il convient de noter que le générateur d'efforts dynamiques et l'actionneur proposés dans l'invention sont avantageux pour traiter la problématique connue, notamment pour les applications aux aéronefs à voilure tournante, du démarrage à froid (-40°C). En effet, dans le cadre de l'invention, une paire de stators bobinés encadre les roulements R1, R2 et/ou paliers à aiguilles 162'a, 162'b constituant la source principale de pertes de puissance lors d'un démarrage à basse température. Une solution pour pallier à un problème de surconsommation électrique dans ces conditions extrêmes consiste à prévoir une stratégie, qui sera d'autant plus efficace, de préchauffage des roulements et aiguilles par une alimentation en courant continu des bobines préalablement au démarrage.

Dans ce cas, un capteur de température CTP peut être intégré dans le générateur d'efforts dynamiques. Avantageusement, il est prévu au niveau de l'axe 110, 110' et/ou avantageusement positionné à proximité des roulements R1, R2 ou, selon le cas, des rangées d'aiguilles 162'a, 162'b (cf. figure 7 par exemple pour les roulements R1, R2 ; figure 9 dans le cas des rangées d'aiguilles). Cela permet de déclencher si besoin ce préchauffage local préliminaire par simple effet Joule dans les bobines si la température mesurée est en deçà d'un seuil critique puis, de lancer la mise en rotation une fois le seuil de température critique dépassé.

Un démarrage rapide du générateur d'efforts dynamiques, même à -40°C, est ainsi rendu possible.

Ceci permet en outre permet d'envisager l'utilisation d'une graisse dont les caractéristiques à froid sont certes moins favorables (en terme de pertes) mais dont les caractéristiques à chaud avantagent la durée de vie des roulements et/ou aiguilles.

## Revendications

1. Générateur (100, 100', 101, 102, 103) d'efforts dynamiques comportant :
- un axe de support (110, 110') ;
- un premier rotor (120) comprenant :
un alésage interne (121) logeant ledit axe de support (110) et au moins deux roulements (R1, R2) ou, selon le cas, au moins deux rangées d'aiguilles (162'a, 162'b), agencé(e)s entre l'axe de support (110) et l'alésage interne (121) de sorte que le premier rotor (120) est monté à rotation par rapport audit axe de support (110, 110'),
un alésage externe (122) décalé radialement et axialement par rapport à l'alésage interne (121) et comprenant une face interne (FIE1) soit munie d'un premier ensemble (180) d'aimants permanents soit crénelée et réalisée en matériau ferromagnétique,
une zone de connexion (123) entre les alésages interne (121) et externe (122) du premier rotor, ladite zone de connexion (123) étant apte, avec l'alésage externe (122), à définir un espace destiné à loger un électroaimant (170) apte à coopérer avec le premier ensemble d'aimants permanents ou, selon le cas, avec ladite face interne (FIE1) crénelée et réalisée en matériau ferromagnétique de l'alésage externe (122) de ce premier rotor (120), afin de constituer un moteur électrique pour le premier rotor (120),
- un premier balourd (130, 130₁) fixé à ou venu de matière avec l'alésage interne (121) du premier rotor (120) et monté en vis-à-vis d'une face externe (FEE1) de l'alésage externe (122) du premier rotor ;
- un deuxième rotor (140) monté à rotation par rapport au premier rotor (120), par l'intermédiaire d'un composant antifriction (160, 161, 162a, 162b) prévu entre le premier rotor (120) et le deuxième rotor (140), ce deuxième rotor (140) comprenant :
un alésage interne (141) logeant l'alésage interne (121) du premier rotor (120), de sorte que lesdits alésages internes (121, 141) du premier et du deuxième rotors (120, 140) sont concentriques,
un alésage externe (142) décalé radialement et axialement par rapport à l'alésage interne (141) et comprenant une face interne (FIE2) soit munie d'un deuxième ensemble (181) d'aimants permanents, soit crénelée et réalisée en matériau ferromagnétique,
une zone de connexion (143) entre les alésages interne (141) et externe (142) du deuxième rotor, ladite zone de connexion (143) étant apte, avec l'alésage externe (142), à définir un espace destiné à loger un électroaimant (171) apte à coopérer avec le deuxième ensemble (181) d'aimants permanents ou selon le cas, ladite face interne (FIE2) crénelée et réalisée en matériau ferromagnétique de l'alésage externe (142) de ce deuxième rotor (140), afin de constituer un moteur électrique pour le deuxième rotor; et
- un deuxième balourd (150, 150₁) fixé à ou venu de matière avec l'alésage interne (141) du deuxième rotor (140) et monté en vis-à-vis d'une face externe (FEE2) de l'alésage externe (142) du deuxième rotor (140).

2. Générateur (100, 100', 101, 102, 103, 104) d'efforts dynamiques selon la revendication 1, **caractérisé en ce que** ledit composant antifriction est un palier lisse (161), mettant par exemple en œuvre un revêtement antifriction, un traitement de surface ou de préférence un coussinet, agencé entre l'alésage interne (121) du premier rotor (120) et l'alésage interne (141) du deuxième rotor (140).

3. Générateur (100, 100', 101, 102, 103, 104) d'efforts dynamiques selon la revendication 1, **caractérisé en ce que** ledit composant antifriction comporte au moins deux rangées d'aiguilles (162a, 162b) agencées entre l'alésage interne (121) du premier rotor (120) et l'alésage interne (141) du deuxième rotor (140).

4. Générateur (100, 100', 101, 102, 103, 104) d'efforts dynamiques selon l'une des revendications précédentes, **caractérisé en ce que** les roulements (R1, R2) ou, selon le cas, les rangées d'aiguilles (162'a, 162'b) agencés entre l'axe de support (110) et l'alésage interne (121) du premier rotor (120) et/ou le composant antifriction (160, 161) est(sont) centré(s) axialement.

5. Générateur (100, 100', 101, 102, 103, 104) d'efforts dynamiques selon l'une des revendications précédentes, **caractérisé en ce que** les roulements (R1, R2) agencés entre l'axe de support (110, 110') et l'alésage interne (121) du premier rotor (120) sont choisis parmi des roulements à billes, à aiguilles ou à rouleaux coniques, de préférence des rouleaux coniques.

6. Générateur (100, 100', 101, 102, 103, 104) d'efforts dynamiques selon l'une des revendications précédentes, **caractérisé en ce que** l'alésage externe (122, 142) du premier et/ou du deuxième rotor (120, 140) est réalisé en un matériau ferromagnétique.

7. Générateur (100, 100', 101, 102, 103, 104) d'efforts dynamiques selon l'une des revendications précédentes, **caractérisé en ce qu'**une première extrémité axiale (EA1) de l'alésage interne (121) du premier rotor (120), située à l'opposé de la zone de connexion (123) correspondante, présente la forme d'au moins une rainure hélicoïdale dont le pas est orienté de façon à faire revenir de la graisse contenu dans ledit générateur vers les roulements (R1, R2) ou, selon le cas, vers les rangées d'aiguilles (162'a, 162'b).

8. Générateur (100, 100' 101, 102, 103, 104) d'efforts dynamiques selon la revendication précédente, **caractérisé en ce qu'**il comprend un composant (191) situé contre une paroi périphérique de l'alésage interne (121) du premier rotor, ladite paroi périphérique formant une deuxième extrémité axiale (EA2) de l'alésage interne (121) du premier rotor (120), opposé à la première extrémité axiale (EA1), ledit composant (191) étant muni d'au moins une rainure hélicoïdale présentant un pas opposé à celui de l'extrémité axiale (EA1) de l'alésage interne (121) du premier rotor (120).

9. Générateur (100, 100', 101, 102, 103, 104) d'efforts dynamiques selon l'une des revendications précédentes, **caractérisé en ce que** l'alésage externe (122, 142) de du premier et/ou du deuxième rotor (120, 140) comporte une piste magnétique (PM, PM'), par exemple de forme annulaire.

10. Générateur d'efforts dynamiques (100, 100', 101, 102, 104) selon l'une des revendications précédentes, **caractérisé en ce que**, pour chacun des premier et deuxième rotors (120, 140), il comprend un capteur de température (CTP), avantageusement disposé sur l'axe de support (110, 110').

11. Générateur (100, 100' 101, 102, 103, 104) d'efforts dynamiques selon l'une des revendications précédentes, **caractérisé en ce qu'**il comprend au moins un aimant permanent (AM1, AM2), dit d'indexation, agencé pour maintenir les balourds (130, 150 ; 130₁, 150₁) en opposition, selon un angle de 180°, lorsque le générateur est au repos, lesdits balourds étant à cet effet soit réalisés en un matériau ferromagnétique soit en un matériau amagnétique mais comportant alors une plaque (AM1') ferromagnétique.

12. Générateur (100, 100', 101, 102, 103, 104) d'efforts dynamiques selon l'une des revendications précédentes, **caractérisé en ce que** les balourds (130, 130₁, 150, 150₁) sont adjacents ou imbriqués.

13. Générateur (100, 100', 101, 102, 104) d'efforts dynamiques selon la revendication précédente, **caractérisé en ce que** les balourds (130, 150) étant adjacents, l'un au moins desdits balourds (130, 150) comprend, sur l'une au moins de ses faces latérales (FL1, FL2, FL3, FL4), un moyen d'amortissement (151), par exemple une pièce en caoutchouc.

14. Générateur d'efforts dynamiques (100, 100', 101, 102, 104) selon l'une des revendications 12 ou 13, **caractérisé en ce que** les balourds étant adjacents, chaque balourd (130₁, 150₁) présente une section, prise dans un plan perpendiculaire à la direction de l'axe de de support (110) en forme de demi-segment de disque.

15. Actionneur (200) comprenant :
- au moins deux générateurs (100, 100') d'efforts dynamiques selon l'une des revendications précédentes agencés de sorte que leurs axes de support (110, 110') sont parallèles ;
- un carter (C) ; et pour chacun des deux générateurs (100, 100') d'efforts dynamiques :
- au moins un premier électroaimant (170), fixé sur le carter (C) et logé dans un espace formé entre ledit carter (C), l'alésage externe (121) et la zone de connexion (123) entre les alésages interne (121) et externe (122) du premier rotor (120) du générateur (100, 100') d'efforts dynamiques concerné, de sorte que ledit au moins un premier électroaimant (170) est situé en vis-à-vis du premier ensemble aimants permanents ou, selon le cas, avec ladite face interne (FIE1) crénelée et réalisée en matériau ferromagnétique de l'alésage externe (122) ;
- au moins un deuxième électroaimant (171), fixé sur le carter (C) et logé dans un espace formé entre ledit carter (C), l'alésage externe (142) et la zone de connexion (143) entre les alésages interne (141) et externe (142) du deuxième rotor (140) du générateur (100, 100') d'efforts dynamiques concerné, de sorte que ledit au moins un deuxième électroaimant (171) est situé en vis-à-vis du deuxième ensemble d'aimants permanents ou, selon le cas, avec ladite face interne (FIE2) crénelée et réalisée en matériau ferromagnétique de l'alésage externe (142).

16. Actionneur (200) selon la revendication précédente, dans lequel l'axe de support (110, 110') de chaque générateur d'efforts dynamiques est fixé sur le carter (C).

17. Actionneur (200) selon l'une des revendications 15 ou 16, comportant une carte électronique (PCB) montée entre le carter (C) et chaque électroaimant (170, 171).

18. Actionneur (200) selon la revendication précédente, **caractérisé en ce que** la carte électronique (PCB) comporte, pour chaque rotor muni d'une série d'aimants permanents, trois cellules de Hall (CH) et un capteur de position (CPA) apte à fournir une information de position angulaire à chaque tour du rotor concerné, par exemple un capteur top-tour.

## Patentansprüche

1. Dynamischer Kraftgenerator (100, 100', 101, 102, 103), umfassend:
- eine Tragachse (110, 110');
- einen ersten Rotor (120), umfassend:
eine innere Ausdrehung (121), welche die Tragachse (110) und mindestens zwei Wälzlager (R1, R2) oder, je nach Fall, mindestens zwei Nadelreihen (162'a, 162'b) unterbringt, die zwischen der Tragachse (110) und der inneren Ausdrehung (121) so angeordnet sind, dass der erste Rotor (120) drehend in Bezug auf die Tragachse (110, 110') montiert ist,
eine äußere Ausdrehung (122), die in Bezug auf die innere Ausdrehung (121) radial und axial versetzt ist und eine Innenfläche (FIE1) umfasst, die entweder mit einer ersten Anordnung (180) von Dauermagneten versehen ist oder gezahnt und aus ferromagnetischem Material ausgeführt ist,
einen Verbindungsbereich (123) zwischen der inneren (121) und äußeren (122) Ausdrehung des ersten Rotors, wobei der Verbindungsbereich (123) fähig ist, mit der äußeren Ausdrehung (122) einen Raum zu definieren, der dazu bestimmt ist, einen Elektromagneten (170) unterzubringen, der fähig ist, mit der ersten Anordnung von Dauermagneten oder, je nach Fall, mit der gezahnten und aus ferromagnetischem Material ausgeführten Innenfläche (FIE1) der äußeren Ausdrehung (122) dieses ersten Rotors (120) zusammenzuwirken, um einen Elektromotor für den ersten Rotor (120) zu bilden,
- eine erste Unwucht (130, 130₁), fixiert an oder aus einem Material mit der inneren Ausdrehung (121) des ersten Rotors (120) und gegenüber einer Außenfläche (FEE1) der äußeren Ausdrehung (122) des ersten Rotors montiert;
- einen zweiten Rotor (140), der drehend in Bezug auf den ersten Rotor (120) mittels einer Antifriktionskomponente (160, 161, 162a, 162b) montiert ist, die zwischen dem ersten Rotor (120) und dem zweiten Rotor (140) vorgesehen ist, wobei dieser zweite Rotor (140) umfasst:
eine innere Ausdrehung (141), welche die innere Ausdrehung (121) des ersten Rotors (120) unterbringt, sodass die inneren Ausdrehungen (121, 141) des ersten und des zweiten Rotors (120, 140) konzentrisch sind,
eine äußere Ausdrehung (142), die in Bezug auf die innere Ausdrehung (141) radial und axial versetzt ist und eine Innenfläche (FIE2) umfasst, die entweder mit einer zweiten Anordnung (181) von Dauermagneten versehen ist oder gezahnt und aus ferromagnetischem Material ausgeführt ist,
einen Verbindungsbereich (143) zwischen der inneren (141) und äußeren (142) Ausdrehung des zweiten Rotors, wobei der Verbindungsbereich (143) fähig ist, mit der äußeren Ausdrehung (142) einen Raum zu definieren, der dazu bestimmt ist, einen Elektromagneten (171) unterzubringen, der fähig ist, mit der zweiten Anordnung (181) von Dauermagneten oder, je nach Fall, der gezahnten und aus ferromagnetischem Material ausgeführten Innenfläche (FIE2) der äußeren Ausdrehung (142) dieses zweiten Rotors (140) zusammenzuwirken, um einen Elektromotor für den zweiten Rotor zu bilden; und
- eine zweite Unwucht (150, 150₁), fixiert an oder aus einem Material mit der inneren Ausdrehung (141) des zweiten Rotors (140) und gegenüber einer Außenfläche (FEE2) der äußeren Ausdrehung (142) des zweiten Rotors (140) montiert.

2. Dynamischer Kraftgenerator (100, 100', 101, 102, 103, 104) nach Anspruch 1, **dadurch gekennzeichnet, dass** die Antifriktionskomponente ein Gleitlager (161) ist, das zum Beispiel eine Antifriktionsbeschichtung, eine Oberflächenbehandlung oder vorzugsweise eine Lagerbuchse verwendet, die zwischen der inneren Ausdrehung (121) des ersten Rotors (120) und der inneren Ausdrehung (141) des zweiten Rotors (140) angeordnet ist.

3. Dynamischer Kraftgenerator (100, 100', 101, 102, 103, 104) nach Anspruch 1, **dadurch gekennzeichnet, dass** die Antifriktionskomponente mindestens zwei Nadelreihen (162a, 162b) umfasst, die zwischen der inneren Ausdrehung (121) des ersten Rotors (120) und der inneren Ausdrehung (141) des zweiten Rotors (140) angeordnet sind.

4. Dynamischer Kraftgenerator (100, 100', 101, 102, 103, 104) nach einem der vorstehenden Ansprüche, **dadurch gekennzeichnet, dass** die Wälzlager (R1, R2) oder, je nach Fall, die Nadelreihen (162'a, 162'b), die zwischen der Tragachse (110) und der inneren Ausdrehung (121) des ersten Rotors (120) angeordnet sind, und/oder die Antifriktionskomponente (160, 161) axial zentriert ist (sind).

5. Dynamischer Kraftgenerator (100, 100', 101, 102, 103, 104) nach einem der vorstehenden Ansprüche, **dadurch gekennzeichnet, dass** die Wälzlager (R1, R2), die zwischen der Tragachse (110, 110') und der inneren Ausdrehung (121) des ersten Rotors (120) angeordnet sind, aus Kugellagern, Nadellagern, Kegelrollenlagern, vorzugsweise Kegelrollenlagern gewählt werden.

6. Dynamischer Kraftgenerator (100, 100', 101, 102, 103, 104) nach einem der vorstehenden Ansprüche, **dadurch gekennzeichnet, dass** die äußere Ausdrehung (122, 142) des ersten und/oder zweiten Rotors (120, 140) aus einem ferromagnetischen Material ausgeführt ist.

7. Dynamischer Kraftgenerator (100, 100', 101, 102, 103, 104) nach einem der vorstehenden Ansprüche, **dadurch gekennzeichnet, dass** ein erstes axiales Ende(EA1) der inneren Ausdrehung (121) des ersten Rotors (120), das sich dem entsprechenden Verbindungsbereich (123) gegenüberliegend befindet, die Form von mindestens einer schraubenförmigen Rille aufweist, deren Steigung so ausgerichtet ist, um Fett, das im Generator enthalten ist, zu den Wälzlagern (R1, R2) oder, je nach Fall, zu den Nadelreihen (162'a, 162'b) zurückkommen zu lassen.

8. Dynamischer Kraftgenerator (100, 100', 101, 102, 103, 104) nach dem vorstehenden Anspruch, **dadurch gekennzeichnet, dass** er eine Komponente (191) umfasst, die sich an einer umlaufenden Wand der inneren Ausdrehung (121) des ersten Rotors befindet, wobei die umlaufende Wand ein zweites axiales Ende (EA2) der inneren Ausdrehung (121) des ersten Rotors (120) bildet, dem ersten axialen Ende (EA1) gegenüberliegend, wobei die Komponente (191) mit mindestens einer schraubenförmigen Rille versehen ist, die eine Steigung aufweist, die jener des axialen Endes (EA1) der inneren Ausdrehung (121) des ersten Rotors (120) entgegengesetzt ist.

9. Dynamischer Kraftgenerator (100, 100', 101, 102, 103, 104) nach einem der vorstehenden Ansprüche, **dadurch gekennzeichnet, dass** die äußere Ausdrehung (122, 142) des ersten und/oder des zweiten Rotors (120, 140) einen Magnetstreifen (PM, PM') umfasst, zum Beispiel in Ringform.

10. Dynamischer Kraftgenerator (100, 100', 101, 102, 103, 104) nach einem der vorstehenden Ansprüche, **dadurch gekennzeichnet, dass** er für jeden des ersten und zweiten Rotors (120, 140) einen Temperaturfühler (CTP) umfasst, der vorteilhafterweise auf der Tragachse (110, 110') angeordnet ist.

11. Dynamischer Kraftgenerator (100, 100' 101, 102, 103, 104) nach einem der vorstehenden Ansprüche, **dadurch gekennzeichnet, dass** er mindestens einen so genannten Indexierungsdauermagneten (AM1, AM2) umfasst, der angeordnet ist, um die Unwuchten (130, 150; 130₁, 150₁) gegenüberliegend, gemäß einem Winkel von 180°, zu halten, wenn sich der Generator in Ruhe befindet, wobei die Unwuchten dazu entweder aus einem ferromagnetischen Material oder aus einem antimagnetischen Material, das jedoch dann eine ferromagnetische Platte (AM1') umfasst, ausgeführt sind.

12. Dynamischer Kraftgenerator (100, 100', 101, 102, 103, 104) nach einem der vorstehenden Ansprüche, **dadurch gekennzeichnet, dass** die Unwuchten (130, 130₁, 150, 150₁) benachbart oder verschachtelt sind.

13. Dynamischer Kraftgenerator (100, 100', 101, 102, 104) nach dem vorstehenden Anspruch, **dadurch gekennzeichnet, dass**, da die Unwuchten (130, 150) benachbart sind, mindestens eine der Unwuchten (130, 150) auf mindestens einer ihrer Seitenflächen (FL1, FL2, FL3, FL4) ein Dämpfungsmittel (151), zum Beispiel ein Gummiteil, umfasst.

14. Dynamischer Kraftgenerator (100, 100', 101, 102, 104) nach einem der Ansprüche 12 oder 13, **dadurch gekennzeichnet, dass**, da die Unwuchten benachbart sind, jede Unwucht (130₁, 150₁) einen Querschnitt in einer Ebene senkrecht zur Richtung der Tragachse (110) in Form eines halben Scheibensegments aufweist.

15. Aktuator (200), umfassend:
- mindestens zwei dynamische Kraftgeneratoren (100, 100') nach einem der vorstehenden Ansprüche, die so angeordnet sind, dass ihre Tragachsen (110, 110') parallel sind;
- ein Gehäuse (C); und für jeden der beiden dynamischen Kraftgeneratoren (100, 100'):
- mindestens einen ersten Elektromagneten (170), der auf dem Gehäuse (C) fixiert ist und in einem Raum untergebracht ist, der zwischen dem Gehäuse (C), der äußeren Ausdrehung (121) und dem Verbindungsbereich (123) zwischen der inneren (121) und äußeren (122) Ausdrehung des ersten Rotors (120) des jeweiligen dynamischen Kraftgenerators (100, 100') gebildet wird, sodass sich der mindestens eine erste Elektromagnet (170) gegenüber der ersten Anordnung von Dauermagneten oder, je nach Fall, der gezahnten und aus ferromagnetischem Material ausgeführten Innenfläche (FIE1) der äußeren Ausdrehung (122) befindet;
- mindestens einen zweiten Elektromagneten (171), der auf dem Gehäuse (C) fixiert ist und in einem Raum untergebracht ist, der zwischen dem Gehäuse (C), der äußeren Ausdrehung (142) und dem Verbindungsbereich (143) zwischen der inneren (141) und äußeren (142) Ausdrehung des zweiten Rotors (140) des jeweiligen dynamischen Kraftgenerators (100, 100') gebildet wird, sodass sich der mindestens eine zweite Elektromagnet (171) gegenüber der zweiten Anordnung von Dauermagneten oder, je nach Fall, der gezahnten und aus ferromagnetischem Material ausgeführten Innenfläche (FIE2) der äußeren Ausdrehung (142) befindet.

16. Aktuator (200) nach dem vorstehenden Anspruch, wobei die Tragachse (110, 110') jedes dynamischen Kraftgenerators auf dem Gehäuse (C) fixiert ist.

17. Aktuator (200) nach einem der Ansprüche 15 oder 16, umfassend eine Leiterplatte (PCB), die zwischen dem Gehäuse (C) und jedem Elektromagnet (170, 171) montiert ist.

18. Aktuator (200) nach dem vorstehenden Anspruch, **dadurch gekennzeichnet, dass** die Leiterplatte (PCB) für jeden Rotor, der mit einer Reihe von Dauermagneten versehen ist, drei Hall-Zellen (CH) und einen Positionssensor (CPA) umfasst, der fähig ist, eine Information über die Winkelposition bei jeder Umdrehung des jeweiligen Rotors bereitzustellen, zum Beispiel ein Top-Tour-Sensor.

## Claims

1. Dynamic force generator (100, 100', 101, 102, 103) comprising:
- a supporting shaft (110, 110');
- a first rotor (120) comprising
an internal bore (121) housing said supporting shaft (110) and at least two bearings (R1, R2) or, as appropriate, at least two rows of needle rollers (162'a, 162'b), arranged between the supporting shaft (110) and the internal bore (121) so that the first rotor (120) is mounted rotatably in relation to said supporting shaft (110, 110'),
an external bore (122) offset radially and axially relative to the internal bore (121) and comprising an inner face (FIE1) either provided with a first set of permanent magnets (180) or ribbed and made of ferromagnetic material,
a connecting zone (123) between the internal bore (121) and the external bore (122) of the first rotor, said connecting zone (123) defining, with the external bore (122), a space intended for housing an electromagnet (170) able to interact with the first set of permanent magnets or, as appropriate, with said ribbed inner face (FIE1), made of ferromagnetic material, of the external bore (122) of this first rotor (120), in order to constitute an electric motor for the first rotor (120),
- a first unbalanced mass (130, 130₁) fixed to or formed integrally with the internal bore (121) of the first rotor (120) and mounted opposite an outer face (FEE1) of the external bore (122) of the first rotor;
- a second rotor (140) mounted rotatably in relation to the first rotor (120), via an antifriction component (160, 161, 162a, 162b) provided between the first rotor (120) and the second rotor (140), this second rotor (140) comprising:
an internal bore (141) housing the internal bore (121) of the first rotor (120), so that said internal bores (121, 141) of the first and second rotors (120, 140) are concentric,
an external bore (142) offset radially and axially relative to the internal bore (141) and comprising an inner face (FIE2) either provided with a second set of permanent magnets (181), or ribbed and made of ferromagnetic material,
a connecting zone (143) between the internal bore (141) and the external bore (142) of the second rotor, said connecting zone (143) defining, with the external bore (142), a space intended for housing an electromagnet (171) able to interact with the second set of permanent magnets (181) or as appropriate, said ribbed inner face (FIE2), made of ferromagnetic material, of the external bore (142) of this second rotor (140), in order to constitute an electric motor for the second rotor; and
- a second unbalanced mass (150, 150₁) fixed to or formed integrally with the internal bore (141) of the second rotor (140) and mounted opposite an outer face (FEE2) of the external bore (142) of the second rotor (140).

2. Dynamic force generator (100, 100', 101, 102, 103, 104) according to claim 1, **characterized in that** said antifriction component is a plain bearing (161), employing, for example, an antifriction coating, a surface treatment or preferably a sleeve bearing, arranged between the internal bore (121) of the first rotor (120) and the internal bore (141) of the second rotor (140).

3. Dynamic force generator (100, 100', 101, 102, 103, 104) according to claim 1, **characterized in that** said antifriction component comprises at least two rows of needle rollers (162a, 162b) arranged between the internal bore (121) of the first rotor (120) and the internal bore (141) of the second rotor (140).

4. Dynamic force generator (100, 100', 101, 102, 103, 104) according to one of the preceding claims, **characterized in that** the bearings (R1, R2) or, as appropriate, the rows of needle rollers (162'a, 162'b) arranged between the supporting shaft (110) and the internal bore (121) of the first rotor (120) and/or the antifriction component (160, 161) is(are) centred axially.

5. Dynamic force generator (100, 100', 101, 102, 103, 104) according to one of the preceding claims, **characterized in that** the bearings (R1, R2) arranged between the supporting shaft (110, 110') and the internal bore (121) of the first rotor (120) are selected from ball bearings, needle-roller bearings or taper roller bearings, preferably taper rollers.

6. Dynamic force generator (100, 100', 101, 102, 103, 104) according to one of the preceding claims, **characterized in that** the external bore (122, 142) of the first and/or of the second rotor (120, 140) is made of a ferromagnetic material.

7. Dynamic force generator (100, 100', 101, 102, 103, 104) according to one of the preceding claims, **characterized in that** a first axial end (EA1) of the internal bore (121) of the first rotor (120), located opposite the corresponding connecting zone (123), is in the form of at least one helicoidal groove with pitch oriented so as to cause the grease contained in said generator to return to the bearings (R1, R2) or, as appropriate, to the rows of needle rollers (162'a, 162'b).

8. Dynamic force generator (100, 100' 101, 102, 103, 104) according to the preceding claim, **characterized in that** it comprises a component (191) located against a peripheral wall of the internal bore (121) of the first rotor, said peripheral wall forming a second axial end (EA2) of the internal bore (121) of the first rotor (120), opposite the first axial end (EA1), said component (191) being provided with at least one helicoidal groove having a pitch opposite to that of the axial end (EA1) of the internal bore (121) of the first rotor (120).

9. Dynamic force generator (100, 100', 101, 102, 103, 104) according to one of the preceding claims, **characterized in that** the external bore (122, 142) of the first and/or of the second rotor (120, 140) comprises a magnetic track (PM, PM'), for example of annular shape.

10. Dynamic force generator (100, 100', 101, 102, 104) according to one of the preceding claims, **characterized in that**, for each of the first and second rotors (120, 140), it comprises a temperature sensor (CTP), advantageously arranged on the supporting shaft (110, 110').

11. Dynamic force generator (100, 100', 101, 102, 103, 104) according to one of the preceding claims, **characterized in that** it comprises at least one permanent magnet (AM1, AM2), called indexing magnet, arranged to hold the unbalanced masses (130, 150; 130₁, 150₁) in opposition, at an angle of 180°, when the generator is at rest, said unbalanced masses being, for this purpose, either made of a ferromagnetic material or of a non-magnetic material but then comprising a ferromagnetic plate (AM1').

12. Dynamic force generator (100, 100', 101, 102, 103, 104) according to one of the preceding claims, **characterized in that** the unbalanced masses (130, 130₁, 150, 150₁) are adjacent or nested.

13. Dynamic force generator (100, 100', 101, 102, 104) according to the preceding claim, **characterized in that** the unbalanced masses (130, 150) are adjacent, and at least one of said unbalanced masses (130, 150) comprises, on at least one of its lateral faces (FL1, FL2, FL3, FL4), a damping means (151), for example a rubber component.

14. Dynamic force generator (100, 100', 101, 102, 104) according to one of claims 12 or 13, **characterized in that** when the unbalanced masses are adjacent, each unbalanced mass (130₁, 150₁) has a section, taken in a plane perpendicular to the direction of the supporting shaft (110), in the form of a half-segment of a disk.

15. Actuator (200) comprising:
- at least two dynamic force generators (100, 100') according to one of the preceding claims, arranged so that their supporting shafts (110, 110') are parallel;
- a housing (C); and for each of the two dynamic force generators (100, 100'):
- at least one first electromagnet (170), fixed on the housing (C) and housed in a space formed between said housing (C), the external bore (121) and the connecting zone (123) between the internal bore (121) and the external bore (122) of the first rotor (120) of the dynamic force generator (100, 100') in question, so that said at least one first electromagnet (170) is located facing the first set of permanent magnets or, as appropriate, with said ribbed inner face (FIE1) made of ferromagnetic material of the external bore (122);
- at least one second electromagnet (171), fixed on the housing (C) and housed in a space formed between said housing (C), the external bore (142) and the connecting zone (143) between the internal bore (141) and the external bore (142) of the second rotor (140) of the dynamic force generator (100, 100') in question, so that said at least one second electromagnet (171) is located facing the second set of permanent magnets or, as appropriate, with said ribbed inner face (FIE2) made of ferromagnetic material of the external bore (142).

16. Actuator (200) according to the preceding claim, in which the supporting shaft (110, 110') of each dynamic force generator is fixed on the housing (C).

17. Actuator (200) according to one of claims 15 or 16, comprising a circuit board (PCB) mounted between the housing (C) and each electromagnet (170, 171).

18. Actuator (200) according to the preceding claim, **characterized in that** the circuit board (PCB) comprises, for each rotor provided with a series of permanent magnets, three Hall cells (CH) and a position sensor (CPA) able to supply information on angular position at each turn of the rotor in question, for example a top tour sensor.
